# EUROPEAN PATENT SPECIFICATION

(11) **EP 3 171 550 B1**
(45) Date of publication and mention of the grant of the patent: **25.07.2018**
(21) Application number: 16198625.2
(22) Date of filing: 14.11.2016
(51) Int. Cl.: H04L 12/28

(54) **MESSAGE RECEPTION DEVICE AND SCREEN TRANSITION METHOD**
NACHRICHTENEMPFANGSVORRICHTUNG UND BILDSCHIRMÜBERGANGSVERFAHREN
DISPOSITIF DE RÉCEPTION DE MESSAGE ET PROCÉDÉ DE TRANSITION D'ÉCRAN

(30) Priority: 18.11.2015 JP 2015225398
(43) Date of publication of application: 24.05.2017
(73) Proprietor: Panasonic Intellectual Property Management Co., Ltd., Osaka-shi, Osaka 540-6207 (JP)
(72) Inventor: NAKAMURA, Koji, Osaka, 540-6207 (JP); YOSHIMURA, Yasuo, Osaka, 540-6207 (JP)
(74) Representative: Schwabe - Sandmair - Marx

(56) References cited:
- US-A1- 2006 100 002
- US-A1- 2006 126 617
- US-A1- 2010 106 313
- US-A1- 2015 097 689

## Description

### BACKGROUND

### 1. Technical Field

The present disclosure relates to a message reception device that can be used for a household-electrical-appliance network system when household electrical appliances in a house and a condominium building are connected to a network.

### 2. Description of the Related Art

In the recent years, there have been provided services for remotely controlling household electrical appliances such as an air conditioner, a microwave oven, and a refrigerator that are connected to a network, by using a portable terminal device.

According to such a communication system for remotely controlling household electrical appliances from a portable terminal device, it becomes possible to carry out power supply control and operation control of a personal computer and household electrical appliances installed in a house or in a condominium building. Further, when a user stores and saves a result of controlling household electrical appliances in a server as an operation history, it becomes possible to analyze the operation history. Therefore, proposing an optimum household-electrical-appliance utilization method to the user can be expected.

According to PTL 1, information acquired from a plurality of air conditioning apparatuses is stored in the server, and it is possible to make a terminal unit specify an air conditioner from which an analysis result of the stored information is supplied.

Further, according to PTL 2, it is possible to display an operation button corresponding to an instruction command for making an apparatus operate, and transmit a command that matches a transmission message to the apparatus.

However, according to the method disclosed in PTL 1, in the portable terminal device, after message notification, it is not possible to simplify transition to an application screen for carrying out a necessary operation to an electrical apparatus in accordance with conditions of the electrical apparatus being used and an indoor environment (for example, room temperature) in which the electrical apparatus is placed. Therefore, it takes time to reach the screen on which necessary action, such as operation and instruction to the household electrical appliance, can be carried out.

Further, according to the method disclosed in PTL 2, only a button corresponding to a transmission command of a household electrical appliance can be selected, and it is not possible to carry out transition to the application screen installed in the portable terminal device. Therefore, there is a problem in that it is not always possible to make transition to the application screen for carrying out a necessary operation to the electrical apparatus in accordance with conditions of the electrical apparatus and indoor environment in which the electrical apparatus is placed.

### Citation List

### Patent Literatures

PTL 1: Unexamined Japanese Patent Publication No. 2015-75307
PTL 2: Unexamined Japanese Patent Publication No. 2015-65590

US 2015/0097689 A1 discloses a method for pairing two or more hazard detectors with a user account. The method may include using an application on a mobile device to establish first wireless communications with a first hazard detector that was previously paired with the user account. The method may also include transmitting, to the first hazard detector and using the first wireless protocol, a transmission that instructs the first hazard detector to establish second wireless communications with a second hazard detector, where the second wireless communications use a second wireless protocol. The method may additionally include transmitting network credentials to the first hazard detector using the first wireless protocol, where the credentials are then sent from the first hazard detector to the second hazard detector using the second wireless protocol, such that the second hazard detector can pair with the user account using the first wireless protocol.

### SUMMARY

The present disclosure has been made in consideration of such conventional problems as described above. The present disclosure provides a message reception device and a screen transition method capable of storing information of an apparatus connected to a network, notifying a portable terminal device owned by a user, of a result of analyzing a state of the apparatus, and quickly transiting to an application screen having a high necessity of carrying out an operation and an instruction to the apparatus.

Specifically, a message reception device according to an example of an exemplary embodiment of the present disclosure includes a communication unit configured to receive message information from a device linkage server to which at least one electrical apparatus such as a household electrical appliance is connected. In the message information, a message text for giving notice concerning the apparatus is related to a service ID for identifying a content of a service concerning the electrical apparatus. Further, the message reception device according to the example of the exemplary embodiment of the present disclosure includes an application-transition-screen generator configured to extract display button information corresponding to a service ID included in message information from application transition information having the service ID, display button information, and transition destination information which are corresponding to each other, and configured to generate a notification screen including a display button corresponding to the display button information and a notification message corresponding to the message text included in the message information. Further, the message reception device according to the example of the exemplary embodiment of the present disclosure includes a screen output unit configured to output the notification screen. Further, the message reception device according to the example of the exemplary embodiment of the present disclosure includes an application-start instructor configured to make the notification screen transit to an application screen on which an application prescribed by the transition destination information corresponding to the display button information starts, or to a function screen prescribed by the transition destination information corresponding to the display button information, based on the application transition information, when a display button is selected on the notification screen.

Based on such configuration, buttons for transiting to the application screen and the function screen which meet the message content after the notification can be presented to the user. Therefore, it becomes possible to reduce procedure and time required to start the application of high necessity and reach the function screen of high necessity.

A screen transition method according to an example of the exemplary embodiment of the present disclosure includes a step of receiving, from a device linkage server to which at least one electrical apparatus is connected, message information having a message text for giving notice concerning an electrical apparatus related to a service ID for identifying a content of a service concerning the electrical apparatus, and a step of extracting display button information corresponding to the service ID included in the message information from application transition information having the service ID, display button information, and transition destination information which are corresponding to each other, and a step of generating a notification screen that includes a display button corresponding to the display button information and notification message corresponding to the message text included in the message information. Further, the screen transition method according to the example of the exemplary embodiment of the present disclosure includes a step of making the notification screen transit to an application screen on which an application prescribed by the transition destination information corresponding to the display button information starts, or to a function screen prescribed by the transition destination information corresponding to the display button information, based on the application transition information, when the display button is selected at a screen output unit to which the notification screen is output.

Based on such method, a button for transiting to the application screen and the function screen that meet the message content after the notification can be presented to the user. Therefore, it becomes possible to reduce work and time required to start the application of high necessity and reach the function screen of high necessity.

### BRIEF DESCRIPTION OF THE DRAWINGS

FIG. 1 is a schematic configuration diagram of a communication system according to a first exemplary embodiment of the present disclosure;
FIG. 2 is a schematic configuration diagram of a message reception device according to the first exemplary embodiment of the present disclosure;
FIG. 3 is a schematic configuration diagram of a device linkage server according to the first exemplary embodiment of the present disclosure;
FIG. 4 is a schematic configuration diagram of a household electrical appliance according to the first exemplary embodiment of the present disclosure;
FIG. 5 is a diagram showing a configuration of reception message information according to the first exemplary embodiment of the present disclosure;
FIG. 6 is a diagram showing a configuration of application transition information according to the first exemplary embodiment of the present disclosure;
FIG. 7 is a diagram showing a configuration of service registration information according to the first exemplary embodiment of the present disclosure;
FIG. 8 is a diagram showing a configuration of transmission data according to the first exemplary embodiment of the present disclosure;
FIG. 9 is a flowchart from message notification by the device linkage server to display of a transition screen to an application in the message reception device according to the first exemplary embodiment of the present disclosure;
FIG. 10 is a diagram showing a configuration of household-electrical-appliance managing information according to the first exemplary embodiment of the present disclosure;
FIG. 11 is a diagram showing a configuration of acquisition information according to the first exemplary embodiment of the present disclosure;
FIG. 12 is a diagram showing a configuration of message information according to the first exemplary embodiment of the present disclosure;
FIG. 13 is a view showing a notification screen according to the first exemplary embodiment of the present disclosure;
FIG. 14 is a view showing a function screen according to the first exemplary embodiment of the present disclosure;
FIG. 15 is a flowchart of start and transition of an application in the message reception device according to the first exemplary embodiment of the present disclosure;
FIG. 16 is a diagram showing transition from the function screen to the notification screen according to the first exemplary embodiment of the present disclosure;
FIG. 17 is a schematic view showing a relationship between main configuration elements of the message reception device according to the first exemplary embodiment of the present disclosure;
FIG. 18 is a schematic view showing a relationship between main configuration elements of the device linkage server according to the first exemplary embodiment of the present disclosure;
FIG. 19 is a schematic configuration diagram of a communication system according to a second exemplary embodiment of the present disclosure;
FIG. 20 is a schematic configuration diagram of a message reception device according to the second exemplary embodiment of the present disclosure;
FIG. 21 is a schematic configuration diagram of a device linkage server according to the second exemplary embodiment of the present disclosure;
FIG. 22 is a diagram showing a configuration of application transition information according to the second exemplary embodiment of the present disclosure;
FIG. 23 is a diagram showing a configuration of reception message information according to the second exemplary embodiment of the present disclosure;
FIG. 24 is a diagram showing a configuration of error information according to the second exemplary embodiment of the present disclosure;
FIG. 25 is a diagram showing a concrete example of acquisition information according to the second exemplary embodiment of the present disclosure;
FIG. 26 is a diagram showing a configuration of transmission data according to the second exemplary embodiment of the present disclosure;
FIG. 27 is a flowchart from message notification by the device linkage server to display of a transition screen to an application in the message reception device according to the second exemplary embodiment of the present disclosure;
FIG. 28 is a view showing a notification screen according to the second exemplary embodiment of the present disclosure;
FIG. 29 is a diagram showing transition from the notification screen to a service setting screen according to the second exemplary embodiment of the present disclosure;
FIG. 30 is a schematic view showing a relationship between main configuration elements of the device linkage server according to the second exemplary embodiment of the present disclosure;
FIG. 31 is a schematic view showing a relationship between main configuration elements of the message reception device according to the second exemplary embodiment of the present disclosure;
FIG. 32 is a schematic configuration diagram of a communication system according to a third exemplary embodiment of the present disclosure;
FIG. 33 is a schematic configuration diagram of a message reception device according to the third exemplary embodiment of the present disclosure;
FIG. 34 is a schematic configuration diagram of a device linkage server according to the third exemplary embodiment of the present disclosure;
FIG. 35 is a diagram showing a configuration of service registration information according to the third exemplary embodiment of the present disclosure;
FIG. 36 is a diagram showing a configuration of application transition information according to the third exemplary embodiment of the present disclosure;
FIG. 37 is a diagram showing a configuration of reception message information according to the third exemplary embodiment of the present disclosure;
FIG. 38 is a diagram showing a configuration of transmission data according to the third exemplary embodiment of the present disclosure;
FIG. 39 is a flowchart from message notification by the device linkage server to display of a transition screen to an application in the message reception device according to the third exemplary embodiment of the present disclosure;
FIG. 40 is a view showing a notification screen according to the third exemplary embodiment of the present disclosure;
FIG. 41 is a diagram showing transition from the notification screen to a service setting screen according to the third exemplary embodiment of the present disclosure;
FIG. 42 is a schematic view showing a relationship between main configuration elements of the message reception device according to the third exemplary embodiment of the present disclosure.
FIG. 43 is a schematic view showing a relationship between main configuration elements of the device linkage server according to the third exemplary embodiment of the present disclosure; and
FIG. 44 is a flowchart from indoor-temperature acquisition to user's operation error determination by the device linkage server according to the third exemplary embodiment of the present disclosure.

### DETAILED DESCRIPTION

Hereinafter, exemplary embodiments of the present disclosure will be described with reference to drawings. Each exemplary embodiment described below is an example, and a configuration of a system and a configuration of a functional block are not limited to those described hereunder in each exemplary embodiment.

### FIRST EXEMPLARY EMBODIMENT

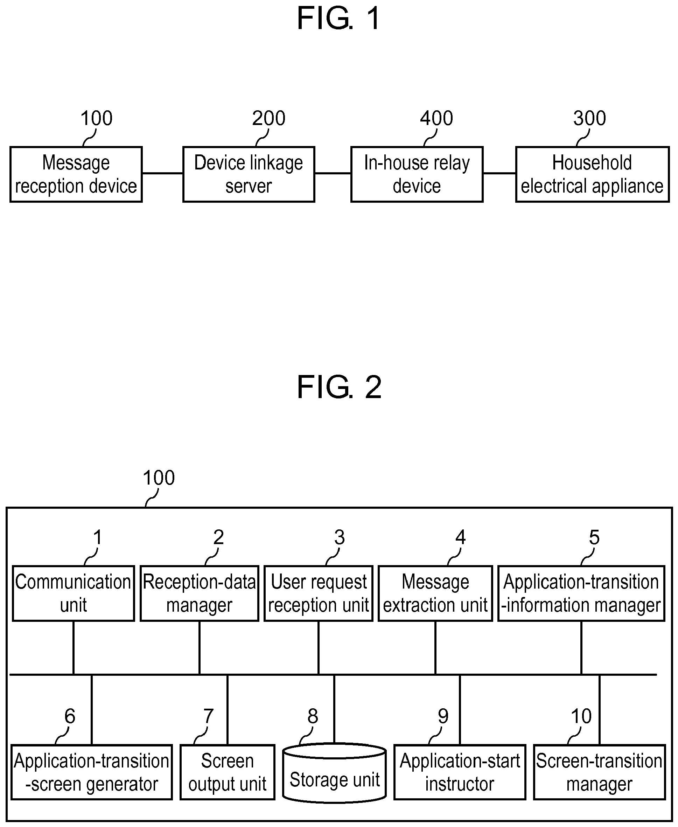

FIG. 1 shows a communication system according to a first exemplary embodiment of the present disclosure. The communication system according to the first exemplary embodiment of the present disclosure is configured by message reception device 100, device linkage server 200, household electrical appliance 300, and in-house relay device 400.

Household electrical appliance 300 is an electrical apparatus such as an air conditioning apparatus (for example, an air conditioner) a refrigerator-freezer, a rice cooker, a microwave oven, an illumination apparatus, and a washing and drying machine, installed in a house or in a residence site, for example. Household electrical appliance 300 is not limited to these apparatuses but includes an auto lock system at a garage or at an entrance, a hot-water supply system, and compact electrical devices such as a personal computer and a telephone, etc. Household electrical appliance 300 can be a single apparatus or a plurality of apparatuses. Hereinafter, in the present exemplary embodiment, household electrical appliance 300 will be described as an air conditioner.

Hereinafter, message reception device 100, device linkage server 200, household electrical appliance 300, and in-house relay device 400 will be described in detail in this order.

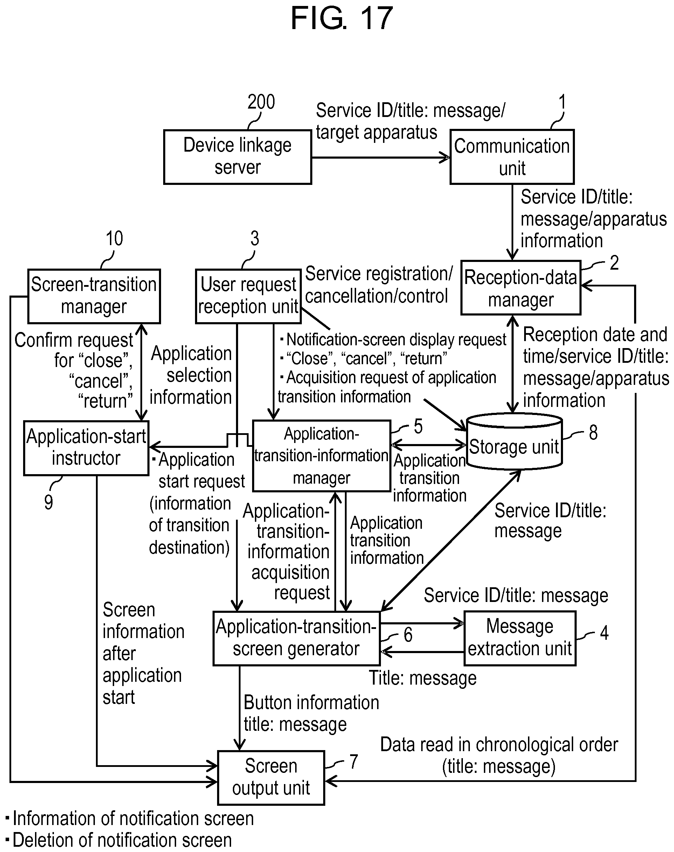

First, message reception device 100 will be described. FIG. 2 is a schematic configuration diagram showing main configuration elements of message reception device 100 according to the first exemplary embodiment of the present disclosure. Further, FIG. 17 is a schematic view for describing a relationship between main configuration elements of message reception device 100.

Message reception device 100, as shown in FIG. 1, is a communication device capable of communicating with device linkage server 200, and is a portable telephone or a portable information terminal, for example.

As shown in FIG. 2, message reception device 100 has communication unit 1, reception-data manager 2, user request reception unit 3, message extraction unit 4, application-transition-information manager 5, application-transition-screen generator 6, screen output unit 7, storage unit 8, application-start instructor 9, and screen-transition manager 10.

The configuration elements in message reception device 100 described above, and communication unit 21, data acquisition unit 22, full-time analyzer 23, transmission data generator 24, user request reception unit 25, service registration/cancellation unit 26, storage unit 27, and on-demand analyzer 28 in device linkage server 200, which are described later, are configured by LSI (Large Scale Integration) as an integrating circuit.

Each configuration element and each part of these elements may be individually formed on one chip, or may be formed on one chip as a part or a whole of these elements. In the present exemplary embodiment, an example configured by LSI is described. The LSI is also referred to as IC, system LSI, super LSI, or ultra LSI, depending on difference in integration degree. Further, a method of forming the configuration elements in an integrating circuit is not limited to LSI, but integration may be carried out by an exclusive circuit or a general-purpose processor. After manufacturing of LSI, each part may be configured by utilizing a programmable FPGA (Field Programmable Gate Array), and utilizing a configurable processor capable of reconfiguring connection and setting of circuit cells inside the LSI. Further, by utilizing a circuit integration technology replaced by LSI, by a separate technology advanced or derived from a semiconductor technology, each part may be integrated. For example, integration may be carried out by applying biotechnology.

Communication unit 1 of message reception device 100 is a mechanism for communicating with device linkage server 200 or other server. Communication unit 1 of message reception device 100 carries out cable communication using Ethernet (a registered trade name) LAN, or carries out wireless communication using wireless LAN, ZigBee (a registered trade name), or by specified small power radio. Communication unit 1 receives message information from device linkage server 200. The message information received by communication unit 1 is output to reception-data manager 2.

The message information includes a service ID for identifying a content of a service, and title/message information as a notification message to the user. The service ID may include household-electrical-appliance identification information for identifying household electrical appliance 300 (hereinafter, also referred to as a target apparatus) that becomes a target of a service.

The service includes "prevention from forgetting turn-off' notification for giving notice of a state of a high possibility of forgetting about pressing an operation stop button of a target apparatus. In a case that a target apparatus is the air conditioner, the service includes a service that a temperature sensor provided in the air conditioner detects a temperature in a room in which the air conditioner is installed. The temperature sensor gives notice of "high temperature alert" for giving notice that an indoor temperature is excessively high; "low temperature alert" for giving notice that the indoor temperature is excessively low.

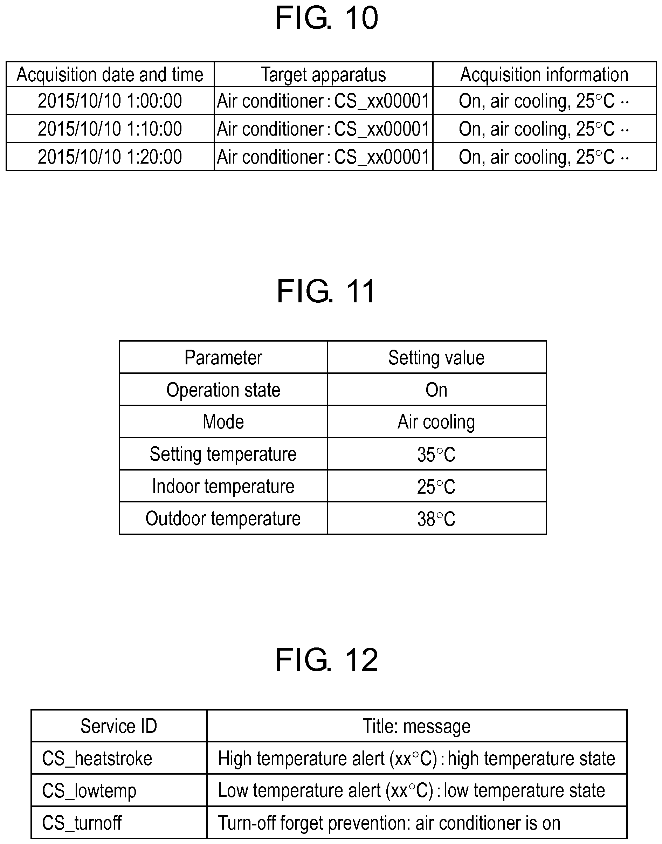

The title/message information includes a message text for giving notice of a state of a target apparatus and a state of a place where a target apparatus is installed, and a title of the message text. The title/message information is configured as "title: message text", by having "title" and "message text" arranged by connection with ": (colon)", for example. FIG. 12 is a diagram showing a configuration of message information according to the first exemplary embodiment of the present disclosure. As shown in FIG. 12, for the "prevention from forgetting turn-off' notification, for example, a title is "prevention from forgetting turn-off', and the message text is "(target apparatus) is in operation". For the "high temperature alert", a title is "high temperature alert (xx°C)", and the message text is "high temperature state". For the "low temperature alert", a title is "low temperature alert (xx°C)", and a message text is "low temperature state".

Reception-data manager 2 registers message information input from communication unit 1 of message reception device 100, as reception message information, into storage unit 8.

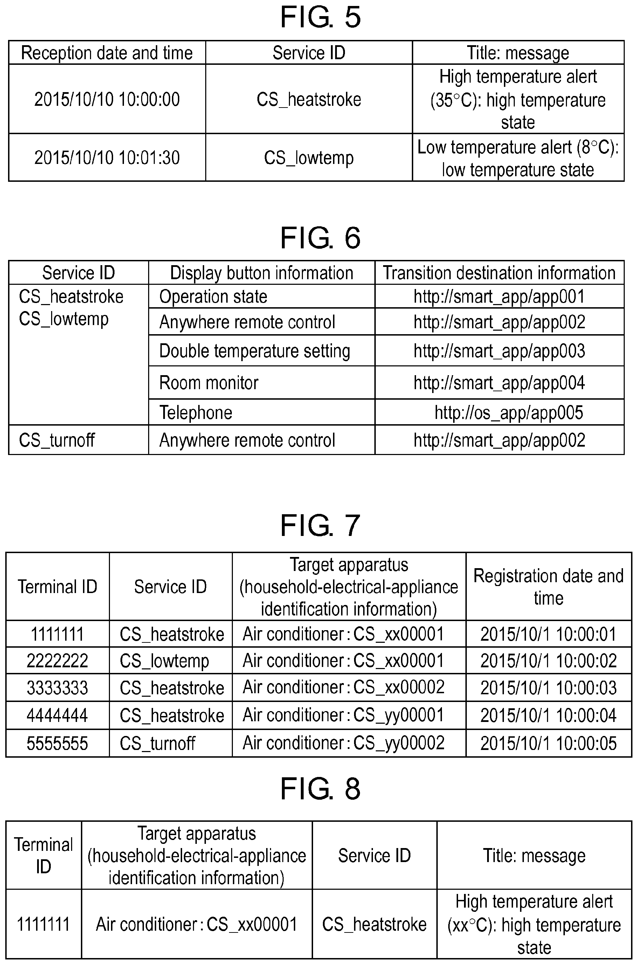

FIG. 5 is a diagram showing a configuration of the reception message information according to the first exemplary embodiment of the present disclosure. Reception message information registered in storage unit 8 includes a date and a time of reception, such as a date and a time when message information is received, a service ID included in the message information, and title/message information included in the message information.

The service ID is information having an ID for identifying a kind of a target apparatus, combined with a type of a service, as shown in FIG. 5. For example, "ID for identifying kind of target apparatus" and "service type" are arranged by connection with "_ (under-bar)", and are configured as "ID for identifying kind of target apparatus service type". More specifically, for example, as shown in FIG. 5, in the case of "CS heatstroke", "CS" indicates that a target apparatus is the air conditioner, and "heatstroke" indicates that the service is "high temperature alert". Further, as shown in FIG. 5, in the case of "CS lowtemp", "CS" indicates that a target apparatus is the air conditioner, and "lowtemp" indicates that the service is "low temperature alert". The service ID may show only a type of a service, without including the ID for identifying a kind of a target apparatus.

User request reception unit 3 is a mechanism for registering service registration information (refer to FIG. 7 which is described later), deleting service registration information registered in the past, and inputting setting of a control signal, for the user to start utilization of the service to device linkage server 200. For example, user request reception unit 3 is an operation panel or the like provided in message reception device 100.

Message extraction unit 4 extracts a message text from the service ID and the title/message information included in the message acquisition request that is input from application-transition-screen generator 6 which is described later. Message extraction unit 4 outputs the message text to application-transition-screen generator 6.

When an application-transition-information acquisition request including a service ID is input from application-transition-screen generator 6 described later, application-transition-information manager 5 reads the application-transition-information managed for each service ID, from storage unit 8, and outputs the read application transition information to application-transition-screen generator 6.

Details of the application transition information are now described, referring to FIG. 6. FIG. 6 is a diagram showing a configuration of application transition information according to the first exemplary embodiment of the present disclosure. In the application transition information, display button information and transition destination information are described for each service ID. The display button information is information of a button, for example, a name of the button that is output to screen output unit 7 which is described later. In the transition destination information, transition information of transition to the application to be started when the button displayed in screen output unit 7 is selected, is described.

Upon receiving a notification-screen display request from user request reception unit 3, application-transition-screen generator 6 carries out a process of reading reception message information from storage unit 8. The notification-screen display request is information including application selection information corresponding to the title/message information selected by user request reception unit 3. The application selection information is information including reception date and time and a service ID.

In order to extract a message text from reception message information read from storage unit 8, application-transition-screen generator 6 outputs a message acquisition request including a service ID and title/message information to message extraction unit 4. Further, application-transition-screen generator 6 outputs an application-transition-information acquisition request to application-transition-information manager 5. The application-transition-information acquisition request includes a service ID of reception message information read from storage unit 8.

Application-transition-screen generator 6 extracts display button information from the application transition information input from application-transition-information manager 5. Then, application-transition-screen generator 6 generates a screen (hereinafter referred to as a notification screen) that includes characters and marks corresponding to display button information and a notification message corresponding to a message text input from message extraction unit 4, and outputs the generated screen to screen output unit 7. The notification message may be the same sentence as a message text, or may be a different sentence.

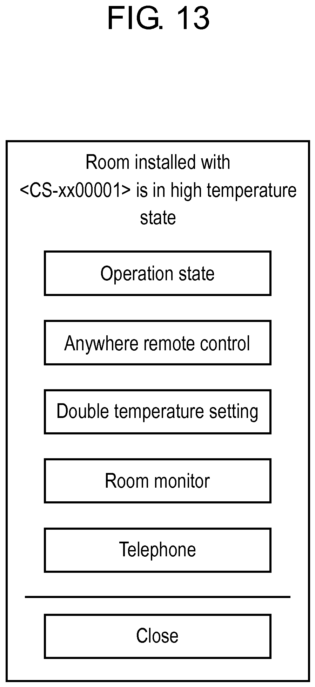

FIG. 13 is a view showing a notification screen according to the first exemplary embodiment of the present disclosure. Screen output unit 7 displays the notification screen input from application-transition-screen generator 6. Examples of the notification screen displayed in screen output unit 7 will be described below.

In a case where a service ID of reception message information read from storage unit 8 is "CS_heatstroke", that is, in a case where the service is "high temperature alert", as shown in FIG. 13, a notification message corresponding to "high temperature state" as a message text of "high temperature alert" is provided to the screen information. A notification message corresponding to a message text of "high temperature alert" is displayed as "room in which <(name of target apparatus)> is installed is in high temperature state", as shown in FIG. 13, for example. At a lower part of the notification message, there are sequentially disposed an "operation state" button, an "anywhere remote control" button, a "double temperature setting" button, a "room monitor" button, and a "telephone" button, as buttons including characters corresponding to the display button information. Further at a lower part of the notification message, a "close" button or a "cancel" button is disposed.

In a case where a service ID of reception message information read from storage unit 8 is "CS_turnoff", that is, in a case where the service is "prevention from forgetting turn-off' notification, a notification message corresponding to "air conditioner is working" as a message text of "prevention from forgetting turn-off' is disposed at an upper part of the screen. A notification message corresponding to the message text of "prevention from forgetting turn-off' is displayed as "<(name of target apparatus)> is operating" or the like. At a lower part of the notification message, the "anywhere remote control" button as a button including a character corresponding to the display button information is disposed. Further at a lower part of the notification message, a "close" button or a "cancel" button is disposed.

Applications that can be started and functions that can be operated when a display button in the notification screen displayed in screen output unit 7 is selected, are as follows, for example. A function that can be operated when the "operation state" button is selected, is a function of displaying an operation state of a target apparatus. A function that can be operated when the "anywhere remote control" button is selected, is a function of remotely controlling a target apparatus. An application that is started when the "telephone" button is selected is the application of a telephone function provided in message reception device 100 for telephoning to a fixed telephone in a house in which a target apparatus is installed and for telephoning to a telephone such as a portable telephone of a person who is in a room in which a target apparatus is installed.

When a target apparatus is the air conditioner, functions that can be operated when a display button is selected include the following, for example. A function that can be operated when the "double temperature setting" button is selected is the function of detecting an indoor temperature, automatically deciding an operation mode, and operating to set the indoor temperature to become within a range of setting temperatures. A function that can be operated when the "room monitor" button is selected is a function of displaying presence or absence of a person in the room as well as large or small of motion of a person in the room which are detected by a human sensor mounted in the air conditioner, and a function of indirectly confirming a state of the person in the room at a place away from the room.

In the present disclosure, a screen that is displayed when a display button on the notification screen displayed in screen output unit 7 is selected, and the application which corresponds to a button being selected and started, is referred to as an application screen. A screen to which the notification screen displayed in screen output unit 7 transits to carry out the function that becomes possible to be operated when the display button is selected is referred to as a function screen.

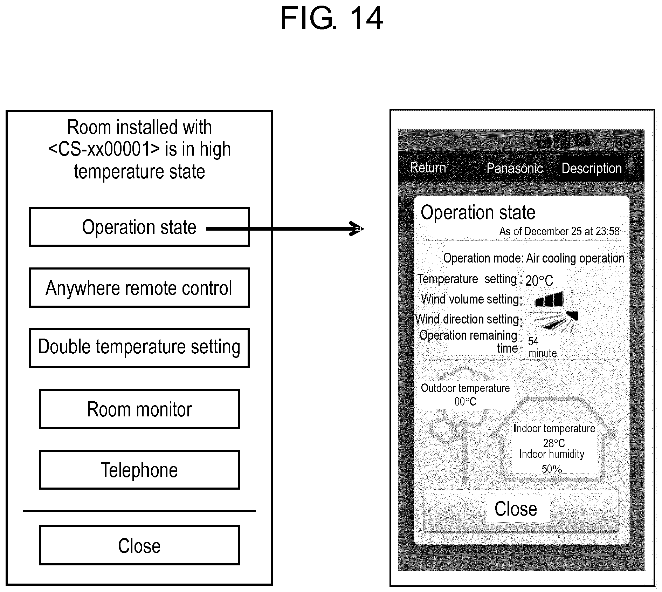

A function screen to which the notification screen of "high temperature alert" service shown in FIG. 13 transits when the "operation state" button is selected is shown in FIG. 14. FIG. 14 is a view showing a function screen according to the first exemplary embodiment of the present disclosure. As shown in FIG. 14, on the function screen of "operation state", characters of "operation state", present time, and information in the acquisition information described later and a "close" button are displayed.

Storage unit 8 saves such information as the following:
- Reception message information that is output by reception-data manager 2 (refer to FIG. 5)
- Application transition information that is saved in advance (refer to FIG. 6)

The application transition information may not be saved in advance in storage unit 8, and may be saved in advance in device linkage server 200. In this case, upon receiving a notification-screen display request, application-transition-screen generator 6 carries out a process of reading application transition information from device linkage server 200.

When the application start request including the transition destination information input from application-transition-information manager 5 is input, application-start instructor 9 carries out an application start process based on the transition destination information, and outputs necessary information to screen output unit 7.

On the notification screen generated by application-transition-screen generator 6, screen-transition manager 10 manages whether to transit to a state of "close" or "cancel" as an operation of ending the display of the notification screen or to continue the display of the notification screen, in accordance with the operation via user request reception unit 3. Further, on the notification screen generated by application-transition-screen generator 6, screen-transition manager 10 transits to the application screen as a screen of an application to be started or to the function screen for realizing a corresponding function, by the button operation via user request reception unit 3. Thereafter, on the application screen or the function screen as a transition destination, when the operation of returning to the original screen of "return" or "close is carried out, screen-transition manager 10 carries out a process of returning to the notification screen.

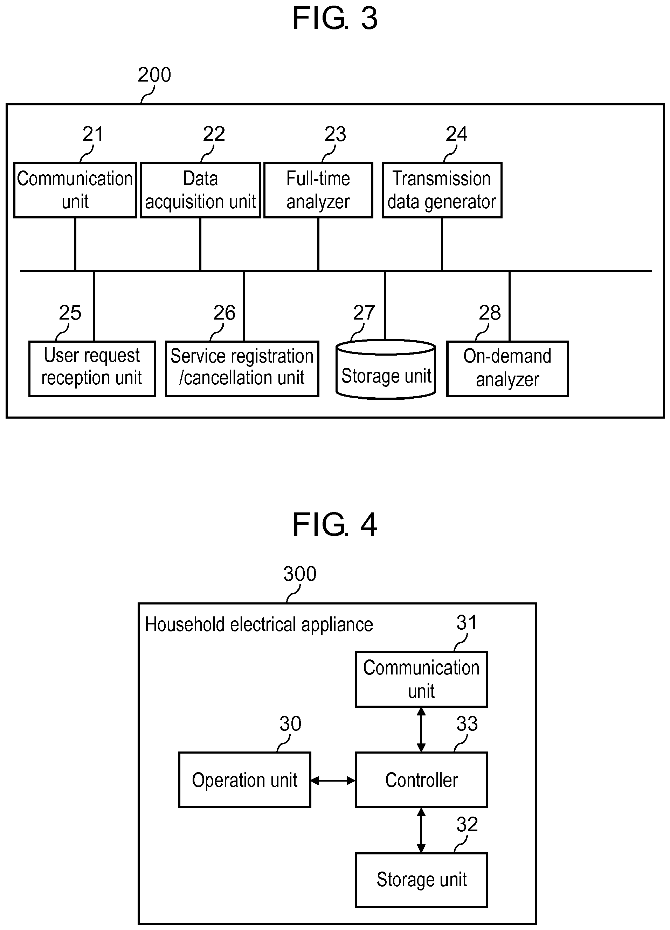

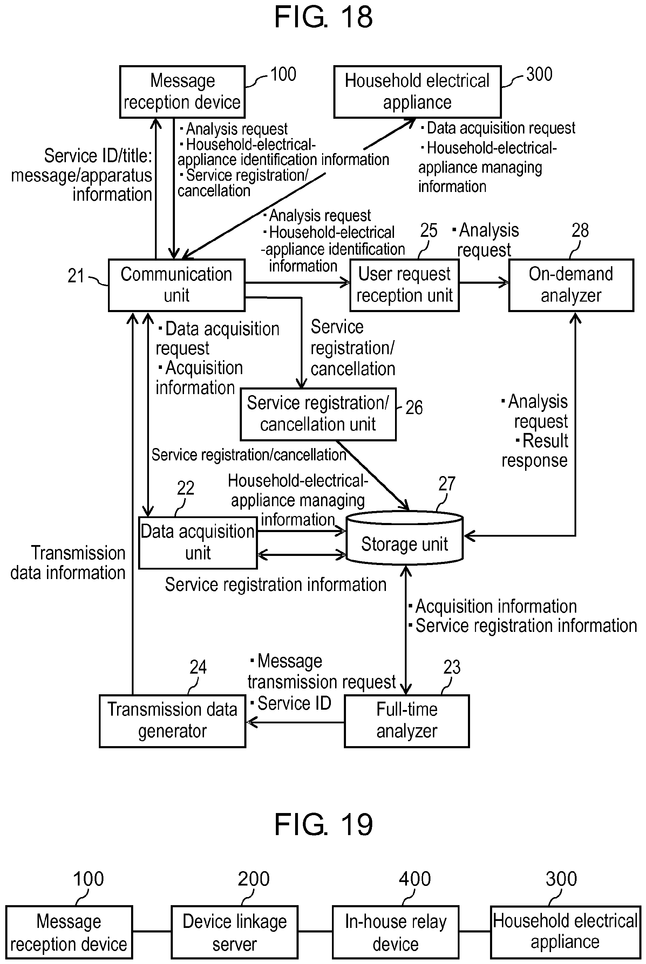

Next, a functional block of device linkage server 200 will be described in detail. FIG. 3 is a schematic configuration diagram showing main configuration elements of device linkage server 200 according to the first exemplary embodiment of the present disclosure. Device linkage server 200 shown in FIG. 3 has communication unit 21, data acquisition unit 22, full-time analyzer 23, transmission data generator 24, user request reception unit 25, service registration/cancellation unit 26, storage unit 27, and on-demand analyzer 28. FIG. 18 is a schematic view showing a relationship between main configuration elements of device linkage server 200.

Communication unit 21 of device linkage server 200 is a mechanism for communicating with message reception device 100 and in-house relay device 400, and carries out cable communication using Ethernet (a registered trade name) LAN, or carries out wireless communication using wireless LAN, ZigBee (a registered trade name), or by specified small power radio, etc.

Communication unit 21 of device linkage server 200 outputs a service ID and title/message information to message reception device 100, based on a data transmission request input from transmission data generator 24 described later. The data transmission request includes a service ID and title/message information for identifying service content.

When a data acquisition request concerning the information managed by household electrical appliance 300 (hereinafter, referred to as household-electrical-appliance managing information) is input from data acquisition unit 22 described later, communication unit 21 of device linkage server 200 outputs the data acquisition request to household electrical appliance 300 via in-house relay device 400.

Data acquisition unit 22 outputs periodical data acquisition requests via in-house relay device 400 concerning the household-electrical-appliance managing information, to communication unit 21 of device linkage server 200. Data acquisition unit 22 outputs the household-electrical-appliance managing information acquired via communication unit 21 to storage unit 27.

FIG. 10 is a diagram showing a configuration of household-electrical-appliance managing information according to the first exemplary embodiment of the present disclosure. The household-electrical-appliance managing information is information including a date and a time of acquisition, household-electrical-appliance identification information for specifying a target apparatus, and acquisition information, as shown in FIG. 10. The date and time of acquisition may be updated to the time when data acquisition unit 22 acquires the household-electrical-appliance managing information via communication unit 21 of device linkage server 200, or may be the acquisition date and time (for example, the date and time when the acquisition information is acquired) that configures the household-electrical-appliance managing information.

FIG. 11 is a diagram showing a configuration of acquisition information according to the first exemplary embodiment of the present disclosure. In a case where household electrical appliance 300 is an air conditioner, for example, as shown in FIG. 11, the acquisition information includes operation state, operation mode, setting temperature, indoor temperature, and outdoor temperature.

Data acquisition unit 22 determines, by referring to service registration information, whether a data acquisition request is necessary for household electrical appliance 300, that is, whether household electrical appliance 300 is a data acquisition target. The service registration information is information registered in advance via user request reception unit 3 of message reception device 100. FIG. 7 is a diagram showing a configuration of service registration information according to the first exemplary embodiment of the present disclosure. As shown in FIG. 7, service registration information is configured by terminal ID, service ID, household-electrical-appliance identification information, and registration date and time. The service registration information is information concerning when (that is, registration date and time) each household electrical appliance 300 (that is, a target apparatus, for example, the air conditioner) is registered, for each service ID. The terminal ID is information for identifying each of a plurality of message reception devices 100 for which registration of each service is requested.

Full-time analyzer 23 periodically acquires, from storage unit 27, acquisition information acquired from household electrical appliance 300, and analyzes the acquisition information. When a certain condition defined for each service is satisfied, full-time analyzer 23 outputs a message transmission request including a service ID, to transmission data generator 24 described later. In order to determine whether household electrical appliance 300 requires analysis, full-time analyzer 23 refers to the service registration information, confirms what service (that is, a registered service ID) is registered to which household electrical appliance 300 (for example, the air conditioner), and carries out the analysis process.

Transmission data generator 24 generates transmission data, based on the message transmission request input from full-time analyzer 23, and outputs the transmission data to communication unit 21 of device linkage server 200. FIG. 8 is a diagram showing a configuration of transmission data according to the first exemplary embodiment of the present disclosure. As shown in FIG. 8, the transmission data includes terminal ID household-electrical-appliance identification information, service ID for identifying a service content, and title/message information tied to each service ID. The title/message information generated by transmission data generator 24 may be configured by a combination of acquisition information acquired from household electrical appliance 300 and a fixed phrase, for example.

When an analysis request including household-electrical-appliance identification information output from communication unit 1 of message reception device 100 is input, user request reception unit 25 outputs a request for analyzing a state of household electrical appliance 300 identified by the household-electrical-appliance identification information, to on-demand analyzer 28 described later. The household-electrical-appliance identification information is a manufacturing number, a product number, and the like configured by numerical characters, alphabetical characters, and marks, capable of uniquely identifying household electrical appliance 300.

When there is input a service registration/cancellation request including the household-electrical-appliance identification information output from communication unit 1 of message reception device 100, service registration/cancellation unit 26 carries out a process of registration or deletion to storage unit 27.

Storage unit 27 saves the following data.
- Household-electrical-appliance managing information periodically acquired from household electrical appliance 300 (refer to FIG. 10) and acquisition information (refer to FIG. 11)
- Service registration information (refer to FIG. 7)

When the analysis request including the household-electrical-appliance identification information is input from user request reception unit 25, on-demand analyzer 28 acquires and analyzes the acquisition information saved in storage unit 27, and gives a response of a result. For example, when there is input an analysis request including "CS_turnoff" as a service ID and "air conditioner: CS xx00001" as household-electrical-appliance identification information for identifying an apparatus, on-demand analyzer 28 extracts the operation state of the air conditioner from the acquisition information saved in storage unit 27, confirms whether the air conditioner is in the operation state, and gives a response of a result.

Further, household electrical appliance 300 will be described with reference to FIG. 4. FIG. 4 is a schematic configuration diagram of a household electrical appliance according to the present exemplary embodiment. Household electrical appliance 300 is configured by operation unit 30, communication unit 31, storage unit 32, and controller 33, as shown in FIG. 4.

Operation unit 30 is a mechanism for setting the operation of household electrical appliance 300, and is an operation panel provided on the surface of household electrical appliance 300, for example. In the present exemplary embodiment, operation unit 30 also has a function as a light reception unit that receives an operation signal input from an infrared remote controller.

Communication unit 31 of household electrical appliance 300 is a mechanism for communicating with device linkage server 200 or in-house relay device 400, and carries out cable communication using Ethernet (a registered trade name) LAN, or wireless communication using wireless LAN, ZigBee (a registered trade name), or by specified small power radio. In FIG. 4, communication unit 31 is incorporated in household electrical appliance 300. However, communication unit 31 may be configured in a unit separate from household electrical appliance 300, and connected by wire to household electrical appliance 300. Communication unit 31 of household electrical appliance 300 is described above as a mechanism for communicating with in-house relay device 400. However, communication unit 31 may be configured to directly communicate with device linkage server 200.

Storage unit 32 stores destination information of in-house relay device 400 or device linkage server 200, or household-electrical-appliance managing information managed by household electrical appliance 300. In communicating with device linkage server 200, controller 33 reads household-electrical-appliance managing information from storage unit 32, and outputs the household-electrical-appliance managing information to communication unit 31 of household electrical appliance 300. The household-electrical-appliance managing information includes the acquisition information. For example, when a target apparatus is the air conditioner, the acquisition information includes the operation state that indicates whether the air conditioner is in the operation state (ON state) or not (OFF state), and the operation mode that indicates that the air conditioner is in the air cooling operation or the air heating operation, as shown in FIG 11. Further, the acquisition information includes a setting temperature corresponding to a target temperature in operating the air conditioner, set by an infrared remote controller via operation unit 30 or the light reception unit, an indoor temperature detected and acquired by a temperature sensor provided in the air conditioner, and an outdoor temperature detected and acquired by the temperature sensor provided in the air conditioner.

In the case of a basic operation control of household electrical appliance 300, for example, in a case where household electrical appliance 300 is an air conditioner, controller 33 carries out control concerning not only the air conditioning operation but also control concerning communication via communication unit 31 of household electrical appliance 300.

Next, in-house relay device 400 will be described. In-house relay device 400 is a communication apparatus, such as a gateway, capable of carrying out a wireless communication with a single or a plurality of household electrical appliance 300 installed in the house, and also capable of communicating with device linkage server 200 via the network. In-house relay device 400 relays the household-electrical-appliance managing information managed by household electrical appliance 300 to device linkage server 200. Further, when communication with household electrical appliance 300 is unsuccessful for some reason, in-house relay device 400 gives a response of the reason to device linkage server 200 as error information.

Hereinafter, an example of a preferable application-screen transition flow of message reception device 100 and device linkage server 200 according to the present exemplary embodiment will be described.

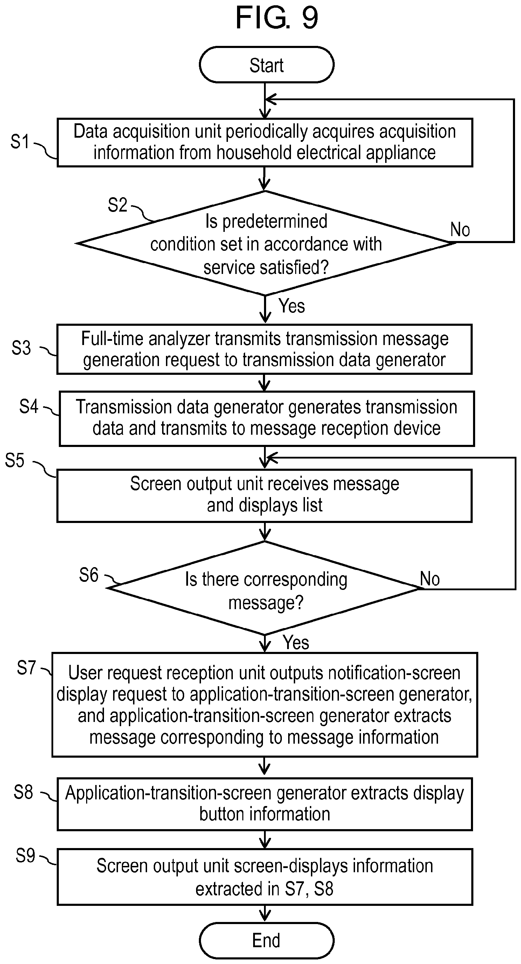

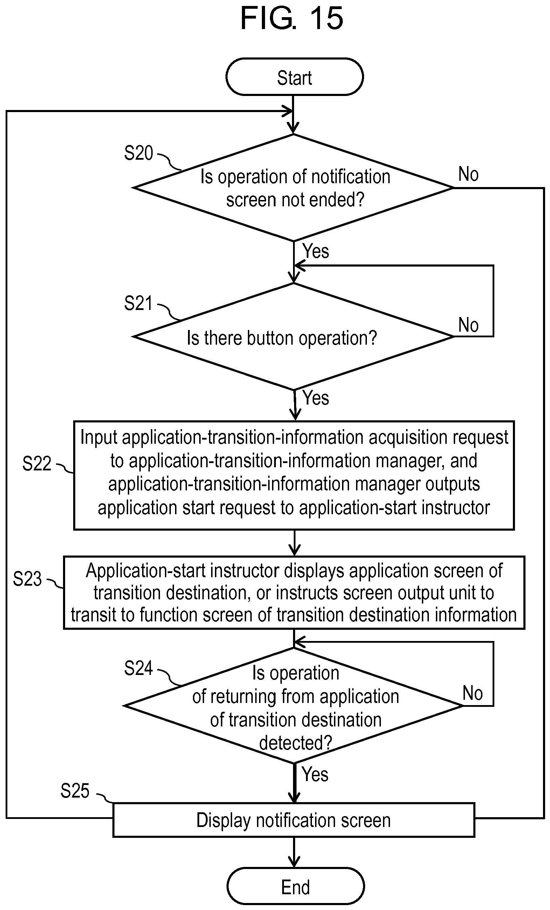

FIG. 9 is a flowchart showing a flow from message notification by device linkage server 200 to display of a transition screen to an application in a message reception device according to the first exemplary embodiment of the present disclosure. FIG. 15 is a flowchart of start and transition of an application in the message reception device according to the first exemplary embodiment of the present disclosure.

Operations of message reception device 100 and device linkage server 200 will be described with reference to FIG. 9 and FIG. 15. With reference to FIG. 9, the operation from message notification by device linkage server 200 to display of a transition screen to an application in message reception device 100 will be described. With reference to FIG. 15, the operation of start and transition of an application in message reception device 100 will described. First, the operation of device linkage server 200 will be described with reference to FIG. 9.

Data acquisition unit 22 periodically acquires acquisition information, that is, setting information of the air conditioner (such as ON/OFF, setting temperature, and indoor temperature acquired by a mounted sensor) (refer to FIG. 11) from the air conditioner (household electrical appliance 300), via communication unit 21 of device linkage server 200. In-house relay device 400 outputs the acquisition information to storage unit 27 (step S1). Here, description will be made by assuming that data is acquired about CS-xx00001 as the air conditioner registered in the service registration information as shown in FIG. 7.

Full-time analyzer 23 periodically reads acquisition information as shown in FIG. 11 registered in storage unit 27, and determines whether the acquisition information satisfies a predetermined condition set in accordance with the service (step S2). For example, in a case where the service ID is "CS _heatstroke", that is, in a case where the service is "high temperature alert", full-time analyzer 23 determines whether the indoor temperature is at or above a predetermined threshold value (for example, 31°C). In a case where the service ID is "CS_lowtemp", that is, in a case where the service is "low temperature alert", full-time analyzer 23 determines whether the indoor temperature is less than a predetermined threshold value (for example, 15°C). Further, in a case where the service ID is "CS_turnoff", that is, in a case where the service is "prevention from forgetting turn-off' notification, full-time analyzer 23 determines whether the air conditioner is in the operation state.

When a predetermined condition is not satisfied (No in step S2), full-time analyzer 23 continuously carries out analysis of data stored in storage unit 27. When the predetermined condition is satisfied (Yes in step S2), the process proceeds to the next step. Full-time analyzer 23 transmits a transmission message generation request including a service ID to transmission data generator 24 (step S3). Here, subsequent description will be made assuming that CS-xx00001, among the air conditioners registered in the service registration information (refer to FIG. 7), satisfies a predetermined condition of the "high temperature alert" service, that is, the indoor temperature exceeds a predetermined threshold value (hereinafter, referred to as the present case).

Upon receiving the transmission message generation request transmitted from full-time analyzer 23, transmission data generator 24 generates transmission data corresponding to the case where the service ID is "CS heatstroke", by referring to the message information (refer to FIG. 12). In the present case, "high temperature alert (xx°C): high temperature state" is selected as the title/message information.

Further, full-time analyzer 23 selects message reception device 100 of which a terminal ID is "1111111", as information of a transmission destination corresponding to the case where the service ID is "CS heatstroke", by referring to the service registration information (refer to FIG. 7). Further, full-time analyzer 23 selects household electrical appliance 300 of which household-electrical-appliance identification information is "air conditioner: CS-xx00001", as a target apparatus.

Transmission data generator 24 generates transmission data (refer to FIG. 8), from a terminal ID, household-electrical-appliance identification information, a service ID, and title/message information (step S4).

After generating transmission data, transmission data generator 24 transmits the transmission data to message reception device 100 via communication unit 21 of device linkage server 200 (step S4). In this case, there is considered a case where transmission data reaches message reception device 100 via the server provided by Google or Apple, for example. However, a transmission route is not limited to this route.

The operation of message reception device 100 will be described with reference to FIG. 9.

Upon receiving the transmission data (refer to FIG. 8) transmitted from device linkage server 200, communication unit 1 of message reception device 100 outputs the message information (refer to FIG. 12) included in the transmission data to reception-data manager 2.

Reception-data manager 2 registers the received message information (refer to FIG. 12) in chronological order into storage unit 8, as the reception message information (refer to FIG. 5). Reception-data manager 2 reads in chronological order the reception message information registered in storage unit 8, and inputs the reception message information to screen output unit 7.

Screen output unit 7 displays title/message information, out of the reception message information input from reception-data manager 2 (step S5). In this case, displaying time information together with title/message is considered. The time information may be reception date and time configuring the reception message information (refer to FIG. 5), or may be date and time which reception-data manager 2 reads in chronological order from storage unit 8. However, the time information is not limited to this.

User request reception unit 3 detects whether a corresponding message is selected from a reception list displayed in screen output unit 7 of message reception device 100 (step S6). When selection of the corresponding message is detected (Yes in step S6), user request reception unit 3 outputs a notification-screen display request including application selection information (reception date and time and a service ID) of the corresponding message to application-transition-screen generator 6 (step S7). Application-transition-screen generator 6 extracts a message corresponding to the message information transmitted from device linkage server 200, based on the application selection information (step S7).

Application-transition-screen generator 6 extracts display button information to be displayed on screen output unit 7 from the application transition information (step S8).

Then, application-transition-screen generator 6 combines the extracted message and the display button information together, and outputs a combined result to screen output unit 7. Screen output unit 7 displays the notification screen input from application-transition-screen generator 6 (step S9). The image of the screen display is shown in FIG. 13.

Next, an application operation flow after displaying the notification screen of message reception device 100 will be described. FIG. 15 is a flowchart of start and transition of an application in the message reception device according to the first exemplary embodiment of the present disclosure.

User request reception unit 3 always monitors a selection of a display button by user operation. Upon detecting the operation of closing or cancelling the notification screen, screen-transition manager 10 ends the display of the notification screen (No in step S20). In a case where the operation of closing or cancelling the notification screen is not detected (Yes in step S20), the process proceeds to the next step.

User request reception unit 3 determines presence or absence of the operation of selecting a display button (step S21). When there is the operation of selecting a display button (Yes in step S21), the process proceeds to the next step. In a case where there is no operation (No in step S21), user request reception unit 3 carries out again a decision of presence or absence of the operation of selecting a display button.

Application-transition-screen generator 6 inputs an application-transition-information acquisition request including a service ID corresponding to the display button, to application-transition-information manager 5. Application-transition-information manager 5 reads corresponding transition destination information from storage unit 8, and outputs an application start request including the transition destination information to application-start instructor 9 (step S22).

Application-start instructor 9 carries out the application start process based on the transition destination information, and outputs the application screen of the application as a transition destination to screen output unit 7. Alternatively, application-start instructor 9 instructs screen output unit 7 to transit to the function screen of the transition destination information (step S23). An example of the image of screen transition in step S20 to step S23 is shown in FIG. 14.

In this case, in transiting to a predetermined function screen, when the "anywhere remote control" button as a button for shifting to a function screen of "anywhere remote control" capable of carrying out remote control of the air conditioner is selected in the state that permission of the remote control setting of the air conditioner is invalid, application-start instructor 9 carries out display for notifying the user that permission of the remote control setting is invalid.

User request reception unit 3 detects the operation of returning from the application of the transition destination, that is, the operation of closing or cancelling the application screen of the application or the function screen of the transition destination (step S24). When the operation of returning from the application of the transition destination is detected (Yes in step S24), user request reception unit 3 inputs the signal for closing or cancelling the application screen or the function screen to screen-transition manager 10.

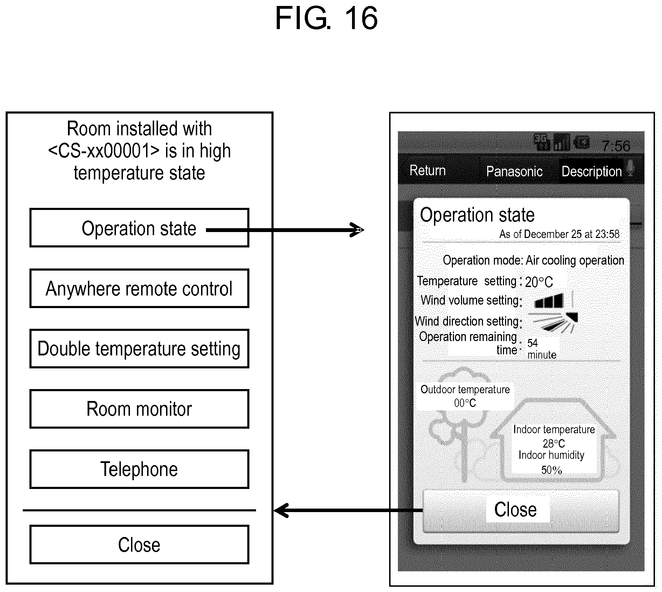

When the operation of returning from the application of the transition destination is detected (Yes in step S24), that is, when "close" or "cancel" is not pressed on the notification screen, screen-transition manager 10 outputs the notification screen to screen output unit 7 (step S25). When the operation of returning from the application of the transition destination is not detected (No in step S24), screen-transition manager 10 detects again the operation of returning from the application of the transition destination. An example of the image of screen transition in step S20 to step S25 is shown in FIG. 16. FIG. 16 is a diagram showing transition from the function screen to the notification screen according to the first exemplary embodiment of the present disclosure.

As described above, in the present exemplary embodiment, in device linkage server 200, data acquisition unit 22 periodically acquires the household-electrical-appliance managing information from household electrical appliance 300. Full-time analyzer 23 analyzes the acquisition information included in the household-electrical-appliance managing information, and determines whether a condition set for each service is satisfied. Transmission data generator 24 generates a service ID for identifying a service content and transmission data utilizing title/message information tied to a service ID. Communication unit 21 of device linkage server 200 transmits the generated transmission data to the network.

Further, in message reception device 100, communication unit 1 receives the transmission data from device linkage server 200. Reception-data manager 2 stores, together with the reception date and time, the message information included in the transmission data transmitted from device linkage server 200. Message extraction unit 4 extracts a message text from the reception data. Application-transition-information manager 5 specifies application transition information tied to the service ID extracted from reception data. Application-transition-screen generator 6 extracts the display button information displayed in screen output unit 7. Application-transition-screen generator 6 generates a notification screen by combining a notification message corresponding to a message text extracted by message extraction unit 4 and a display button. When a display button of the notification screen is selected, application-start instructor 9 starts a suitable application based on the application transition information, and makes the notification screen transit to the application screen. Alternatively, when a display button of the notification screen is selected, application-start instructor 9 makes the notification screen transit to a suitable function screen based on the application transition information.

As described above, in the present exemplary embodiment, message reception device 100 includes communication unit 1, application-transition-screen generator 6, and application-start instructor 9. Communication unit 1 receives a service ID and title/message information included in the transmission data transmitted from device linkage server 200. In storage unit 8 of message reception device 100 or in storage unit 27 of device linkage server 200, there is saved application transition information in which a service ID, display button information concerning a display button used to generate a notification screen, and transition destination information prescribing an application to be started when a display button on the notification screen is selected are related to each other. Then, application-transition-screen generator 6 extracts display button information corresponding to a service ID included in transmission data, from application transition information. Further, application-transition-screen generator 6 generates a notification screen that includes a display button corresponding to the display button information and a notification message corresponding to title/message information included in the transmission data. Application-start instructor 9 included in message reception device 100 makes a suitable application start based on application transition information and makes the notification screen transit to the application screen when a display button on the notification screen is selected.

Based on such a configuration, in message reception device 100, it becomes possible to present the user with a button for transiting to the application screen matching the message content after the notification. It becomes possible to reduce work and time required to start the application of high necessity and reach the screen.

Further, message reception device 100 includes screen-transition manager 10. Screen-transition manager 10 manages presence or absence of the end of the process on the notification screen, and carries out the process of returning from the application screen of the transition destination to the notification screen.

### SECOND EXEMPLARY EMBODIMENT

FIG. 19 is a schematic configuration diagram of a communication system according to a second exemplary embodiment of the present disclosure. The communication system according to the second exemplary embodiment of the present disclosure is configured by message reception device 100, device linkage server 200, household electrical appliance 300, and in-house relay device 400, in a similar manner to that in the first exemplary embodiment.

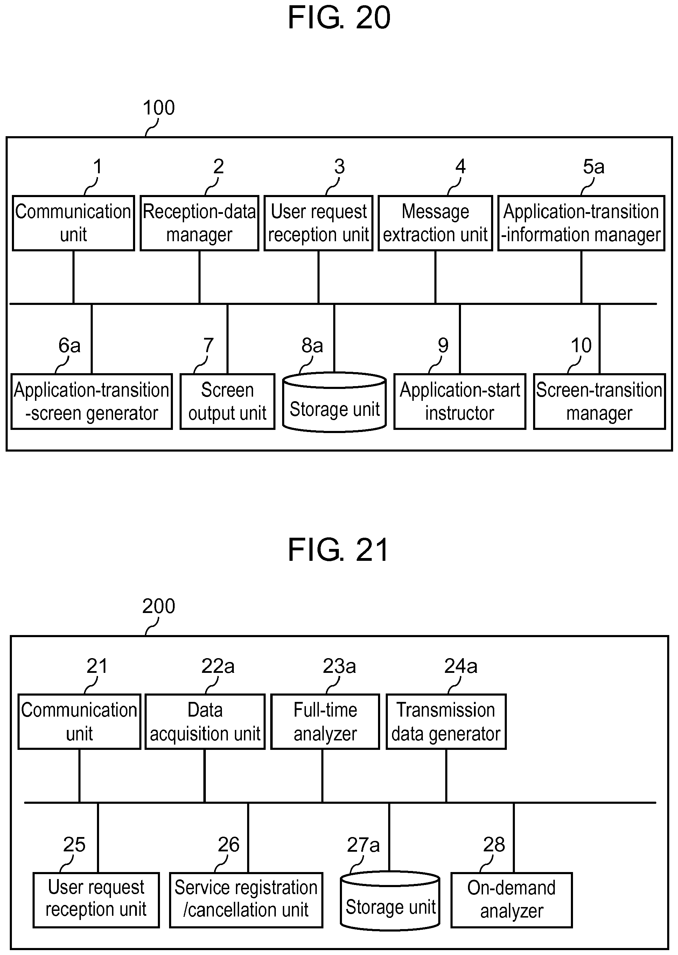

FIG. 20 is a schematic configuration diagram of message reception device 100 according to the second exemplary embodiment of the present disclosure. For the configuration elements that are the same as those in the first exemplary embodiment, the same reference marks will be used, and the descriptions for those configuration elements will be omitted in the second exemplary embodiment.

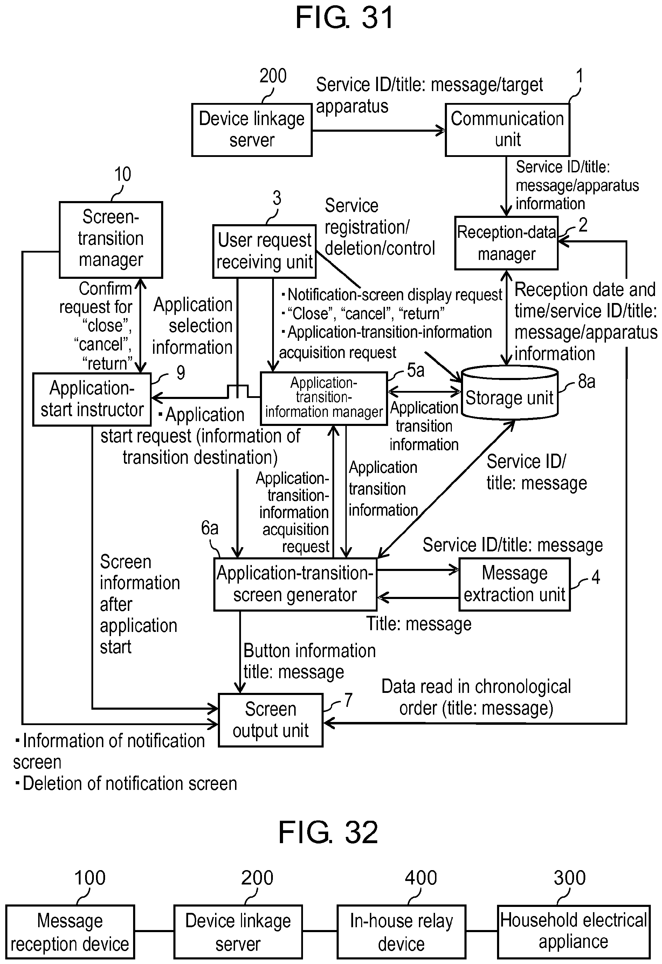

Further, FIG. 31 is a schematic view for describing a relationship between main configuration elements of message reception device 100 according to the second exemplary embodiment of the present disclosure.

When an application-transition-information acquisition request including a service ID is input from application-transition-screen generator 6a, application-transition-information manager 5a reads application transition information managed for each service ID, from storage unit 8a, and outputs the application transition information to application-transition-screen generator 6a described later.

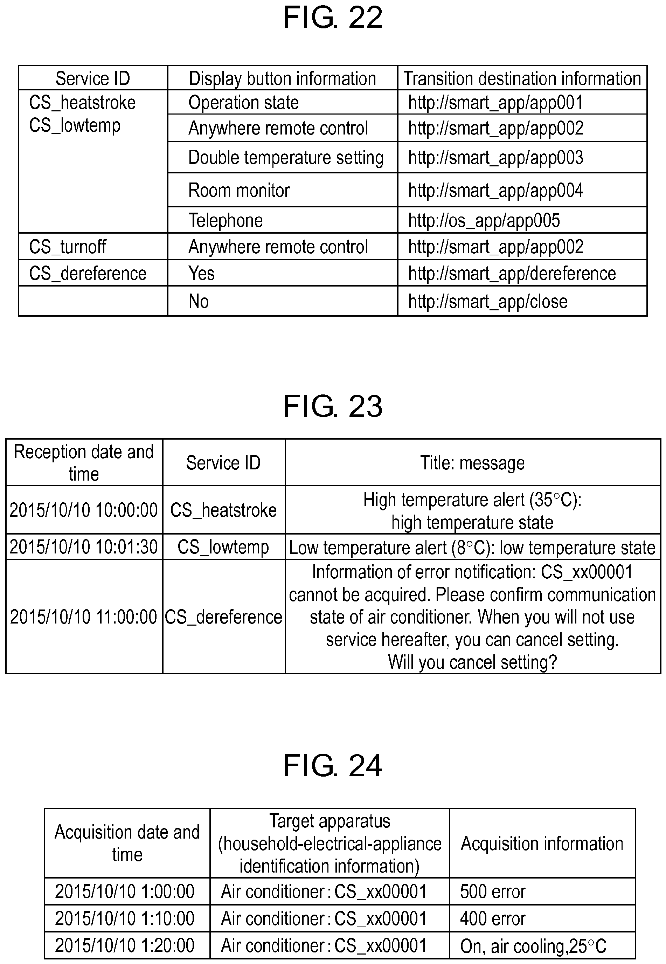

Details of the application transition information will be described with reference to FIG. 22. FIG. 22 is a diagram showing a configuration of application transition information according to the second exemplary embodiment of the present disclosure. In the application transition information, display button information and transition destination information are described for each service ID. The display button information is information of a button that is output to screen output unit 7, for example, a name of the button to be displayed. In the transition destination information, there is described transition information to the application to be started when a button displayed in screen output unit 7 is selected.

FIG. 23 is a diagram showing a configuration of reception message information according to the second exemplary embodiment of the present disclosure. Upon receiving a notification-screen display request from user request reception unit 3, application-transition-screen generator 6a carries out a process of reading reception message information from storage unit 8a as shown in FIG. 23.

In order to extract a message text from the reception message information which is read from storage unit 8a, application-transition-screen generator 6a outputs a message acquisition request including a service ID and title/message information to message extraction unit 4. Further, application-transition-screen generator 6a outputs an application-transition-information acquisition request to application-transition-information manager 5a.

Application-transition-screen generator 6a extracts display button information from the application transition information which is input from application-transition-information manager 5a. Then, application-transition-screen generator 6a generates a notification screen that includes characters and marks corresponding to the display button information and a notification message corresponding to a message text input from message extraction unit 4, and outputs the generated screen to screen output unit 7.

Storage unit 8a saves such information as the following:
- Reception message information that is output by reception-data manager 2 (refer to FIG. 23)
- Application transition information that is saved in advance (refer to FIG. 22)

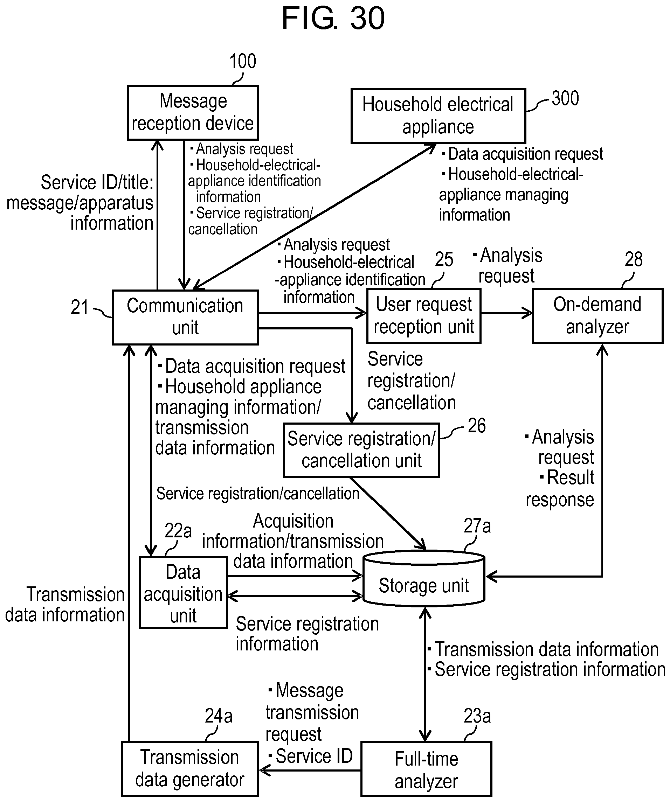

FIG. 21 is a schematic configuration diagram of a device linkage server according to the second exemplary embodiment of the present disclosure. For the configuration elements that are the same as those in the first exemplary embodiment, the same reference marks will be used, and the descriptions of those configuration elements will be omitted in the present exemplary embodiment. FIG. 30 is a schematic view showing a relationship between main configuration elements of the device linkage server according to the second exemplary embodiment of the present disclosure.

Data acquisition unit 22a periodically acquires household-electrical-appliance managing information managed by household electrical appliance 300, via communication unit 21 of device linkage server 200, and outputs the information to storage unit 27a. When data cannot be acquired for some reason from household electrical appliance 300 in the data acquisition process, data acquisition unit 22a outputs this result to storage unit 27a as error information.

FIG. 24 is a diagram showing a configuration of error information according to the second exemplary embodiment of the present disclosure. As shown in FIG 24, the error information output to storage unit 27a is configured by date and time of acquisition, household-electrical-appliance identification information, and acquisition information.

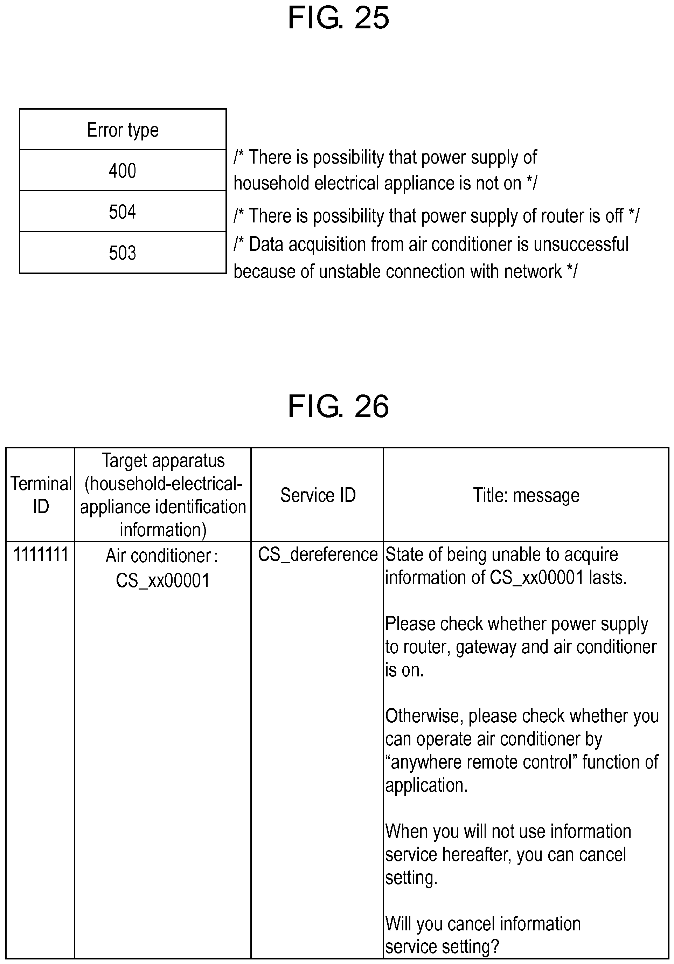

FIG. 25 is a diagram showing a concrete example of acquisition information according to the second exemplary embodiment of the present disclosure. As shown in FIG. 25, when the power supply of household electrical appliance 300 is not on, the acquisition information of error type 400 is returned to device linkage server 200 as in-house relay device 400 cannot carry out communication. When data cannot be acquired because the network between in-house relay device 400 and household electrical appliance 300 is unstable, the acquisition information of error type 503 is returned to device linkage server 200. The error information listed here is an example, and is not limited to these errors. Determination of household electrical appliance 300 as a data acquisition target is carried out by referring to the service registration information as shown in FIG. 7, in a similar manner to that in the first exemplary embodiment.

Full-time analyzer 23a periodically acquires, from storage unit 27a, acquisition information acquired from household electrical appliance 300, and analyzes the acquisition information. When a certain condition defined for each service ID is satisfied, full-time analyzer 23a outputs a message transmission request including a service ID, to transmission data generator 24a described later. When the information read from storage unit 27a is the error information as shown in FIG. 25, full-time analyzer 23a determines that an inconvenience has occurred in the system that provides the service, and outputs to transmission data generator 24a a message transmission request for giving notice of the error occurrence.

Transmission data generator 24a generates transmission data, based on the message transmission request input from full-time analyzer 23a, and outputs the transmission data to communication unit 21 of device linkage server 200 that performs data communication.

FIG. 26 shows details of the transmission data. FIG. 26 is a diagram showing a configuration of transmission data according to the second exemplary embodiment of the present disclosure. As shown in FIG. 26, the transmission data includes a terminal ID, household-electrical-appliance identification information, a service ID for identifying a service type, and title/message information tied to each service ID. In the case of the error information, an ID that indicates the error occurrence is registered, as a service ID. For example, in the case of "CS_dereference", "CS" is the ID indicating that a target apparatus is the air conditioner, and "dereference" is the ID indicating error occurrence.

The title/message information generated may be configured by a combination of acquisition information acquired from household electrical appliance 300 and a fixed phrase, for example, like in the first exemplary embodiment. In the case of error information, for example, a title is "error notification", and a message text is "Information of (target apparatus) cannot be acquired. Please confirm communication state of air conditioner. When you will not use service hereafter, you can cancel setting. Will you cancel setting? (refer to FIG. 23)".

Next, an example of a preferable application-screen transition flow of message reception device 100 and device linkage server 200 according to the present exemplary embodiment will be described.

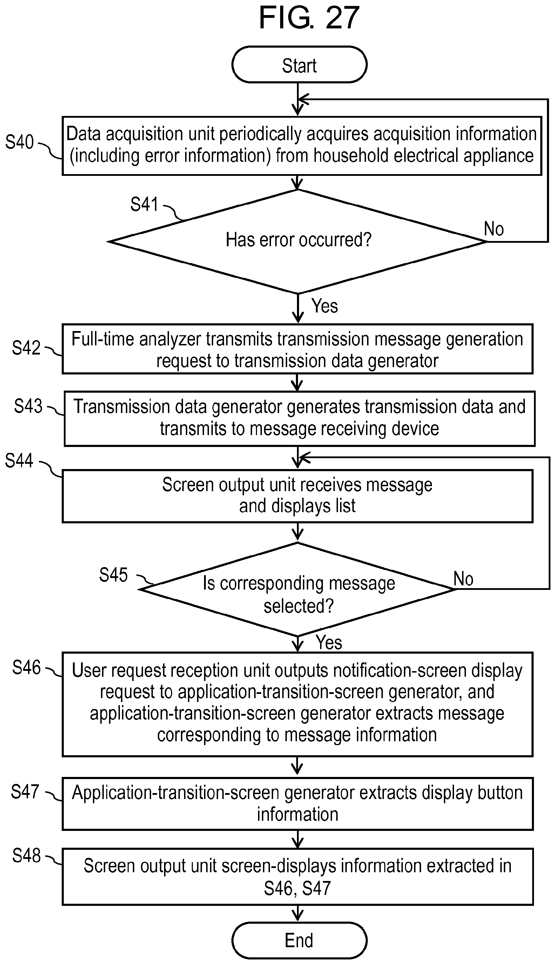

FIG. 27 is a flowchart from message notification by device linkage server 200 to display of a transition screen to an application in a message reception device according to the second exemplary embodiment of the present disclosure. Operations of message reception device 100 and device linkage server 200 will be described with reference to FIG. 27. In the present exemplary embodiment, mainly the operations that are further carried out in addition to the operations described in the first exemplary embodiment will be described.

Data acquisition unit 22a periodically acquires acquisition information (refer to FIG. 11) from the air conditioner as household electrical appliance 300, via communication unit 21 of device linkage server 200, and outputs the acquisition information to storage unit 27a. Further, data acquisition unit 22a similarly outputs to storage unit 27a the error information (refer to FIG. 25) that occurs when device linkage server 200 communicates with household electrical appliance 300 (step S40). Here, description will be made by assuming that data is acquired about household electrical appliance 300 of which household-electrical-appliance identification information shown in FIG. 7 is "air conditioner: CS-xx00001".

Full-time analyzer 23a periodically reads acquisition information and error information registered in storage unit 27a, and analyzes occurrence of an error in data acquisition from household electrical appliance 300 (step S41).

In a case where no error occurs (No in step S41), full-time analyzer 23a continues analysis of data acquired from storage unit 27a. When an error occurs (Yes in step S41), the process proceeds to the next step. Full-time analyzer 23a transmits a transmission message generation request including a service ID to transmission data generator 24a (step S42). After generating transmission data (refer to FIG. 26), transmission data generator 24a transmits the transmission data to message reception device 100 via communication unit 21 of device linkage server 200 (step S43).

Upon receiving the transmission data (refer to FIG.26) transmitted from device linkage server 200, communication unit 1 of message reception device 100 outputs the message information included in the transmission data to reception-data manager 2.

Reception-data manager 2 registers the received message information in chronological order into storage unit 8a, as the reception message information (refer to FIG. 23). Reception-data manager 2 reads in chronological order the reception message information registered in storage unit 8a, and inputs the reception message information to screen output unit 7.

Screen output unit 7 displays the title/message information, out of the reception message information input from reception-data manager 2 (step S44).

User request reception unit 3 detects whether a corresponding message is selected from a reception list displayed in screen output unit 7 of message reception device 100 (step S45). When selection of a corresponding message is detected (Yes in step S45), user request reception unit 3 outputs a notification-screen display request including the application selection information (reception date and time and a service ID) of the corresponding message to application-transition-screen generator 6a.

Application-transition-screen generator 6a extracts a message corresponding to the message information transmitted from device linkage server 200, based on the application selection information (step S46).

Application-transition-screen generator 6a extracts display button information to be displayed in screen output unit 7 from the application transition information (step S47).

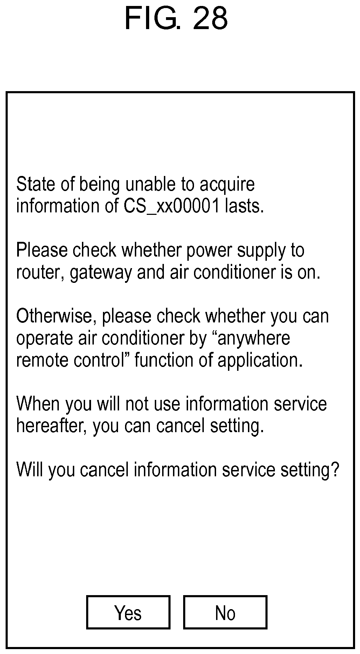

Then, application-transition-screen generator 6a combines the extracted message and the display button information together, and outputs a combined result to screen output unit 7. Screen output unit 7 displays the notification screen input from application-transition-screen generator 6 (step S48). The image of the screen display is shown in FIG. 28.

FIG. 28 is a view showing a notification screen according to the second exemplary embodiment of the present disclosure. In a case where a service ID of reception message information read from storage unit 8a is "CS_dereference", that is, in a case where error information occurs, as shown in FIG. 28, the following notification messages are disposed at an upper part of the screen: "State of being unable to acquire information of <(name of target apparatus)> lasts. Please check whether power supply to router, gateway and air conditioner is ON. Otherwise, please check whether you can operate air conditioner by "anywhere remote control" function of application. When you will not use information service hereafter, you can cancel setting. Will you cancel information service setting?" At a lower part of the notification message, there are disposed a "Yes" button as a service setting cancellation button, and a "No" button as a service setting non-cancellation button.

User request reception unit 3 always monitors whether there is a selection of a display button by user operation. When screen-transition manager 10 detects the operation of selecting the service setting cancellation button, application-transition-screen generator 6 inputs an application-transition-information acquisition request corresponding to the service setting cancellation button, to application-transition-information manager 5. Application-transition-information manager 5 reads corresponding transition destination information from storage unit 8a, and outputs an application start request including the transition destination information to application-start instructor 9.

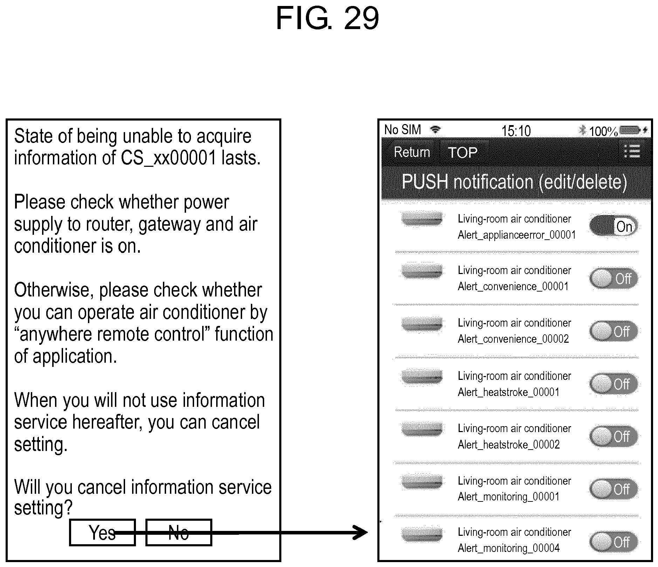

Application-start instructor 9 instructs screen output unit 7 to transit to the service setting screen. That is, on the screen as shown in FIG. 28, when the service setting cancellation button is selected, screen output unit 7 transits the screen to the service setting screen without starting the application. The image of screen transition to the service setting screen is shown in FIG. 29.

FIG. 29 is a diagram showing transition from the notification screen to the service setting screen according to the second exemplary embodiment of the present disclosure. As shown in FIG. 29, on the service setting screen, a part of household-electrical-appliance identification information of air conditioners that become targets of the service out of household electrical appliance 300 is displayed in a list. A display button for cancelling the service setting is displayed for each air conditioner. Accordingly, the user can cancel the service setting of the target air conditioner.

As described above, message reception device 100 according to the present exemplary embodiment is configured to notify the user of a system operation state during provision of a service, and present the user with a button for transiting to the application screen matching the notification content. Therefore, it becomes possible to reduce work and time required to start the application of high necessity and reach the screen.

### THIRD EXEMPLARY EMBODIMENT

FIG. 32 is a schematic configuration diagram of a communication system according to a third exemplary embodiment of the present disclosure. The communication system according to the third exemplary embodiment of the present disclosure is configured by message reception device 100, device linkage server 200, household electrical appliance 300, and in-house relay device 400, in a similar manner to the communication system in the first exemplary embodiment.

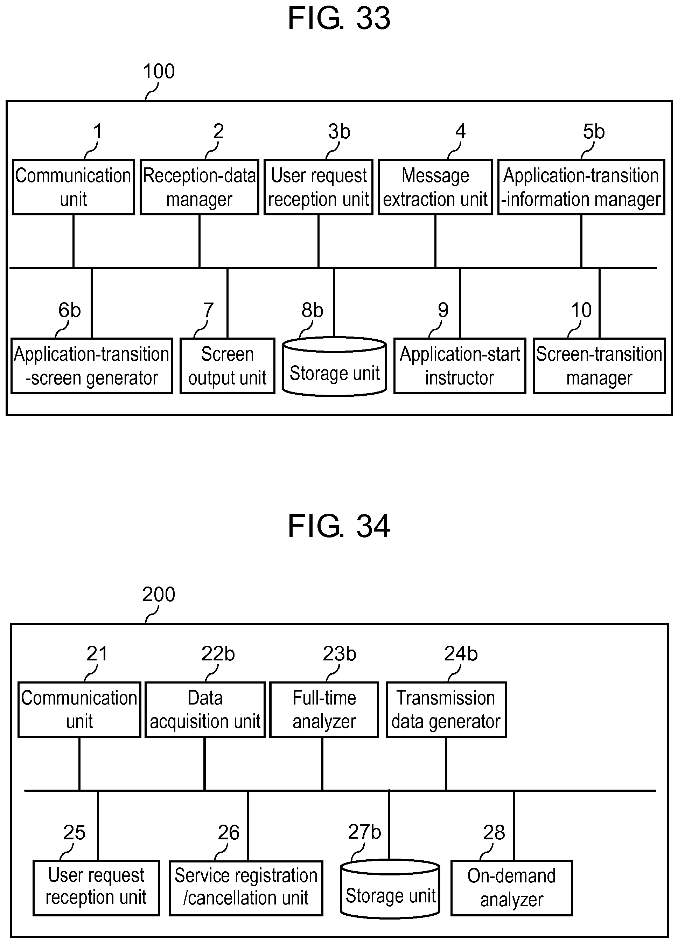

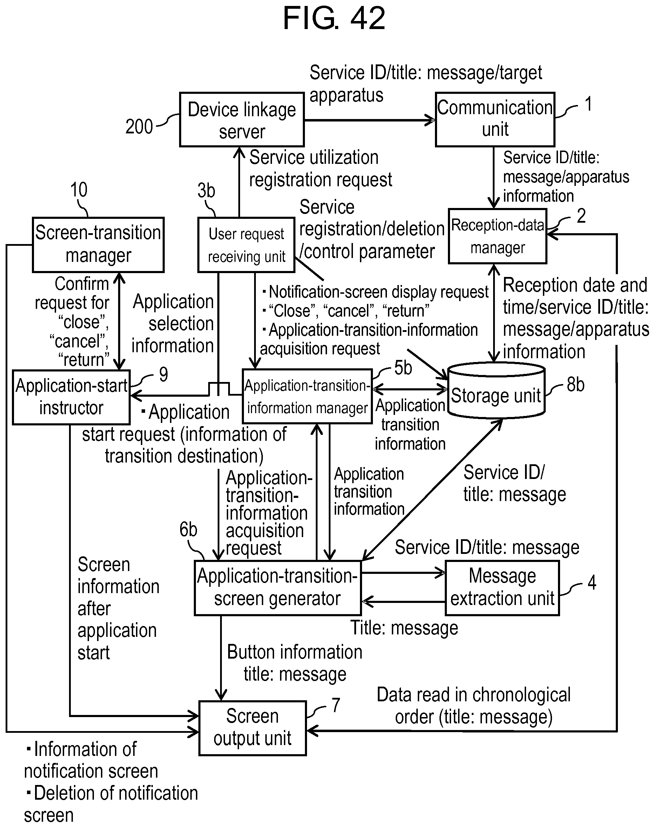

FIG. 33 is a schematic configuration diagram of a message reception device according to the third exemplary embodiment of the present disclosure. Configuration elements that are the same as those of the message reception device in the first exemplary embodiment will use the same reference marks, and description of the configuration elements will be omitted. Further, FIG. 42 is a schematic view for describing a relationship between main configuration elements of message reception device 100 according to the third exemplary embodiment of the present disclosure.

User request reception unit 3b is a mechanism for the user to register service registration information for starting utilization of the service to device linkage server 200, delete service registration information registered in the past, set a control signal and input parameters corresponding to the service. User request reception unit 3b is configured by an operation panel provided in message reception device 100, for example.

As a parameter included in the service registration information, there is, for example, a threshold value for deciding whether to carry out message notification in the service (service ID: CS_heatstroke) of detecting a high temperature in the indoor temperature detected by the air conditioner described in the first exemplary embodiment, and notifying the user of the high temperature.

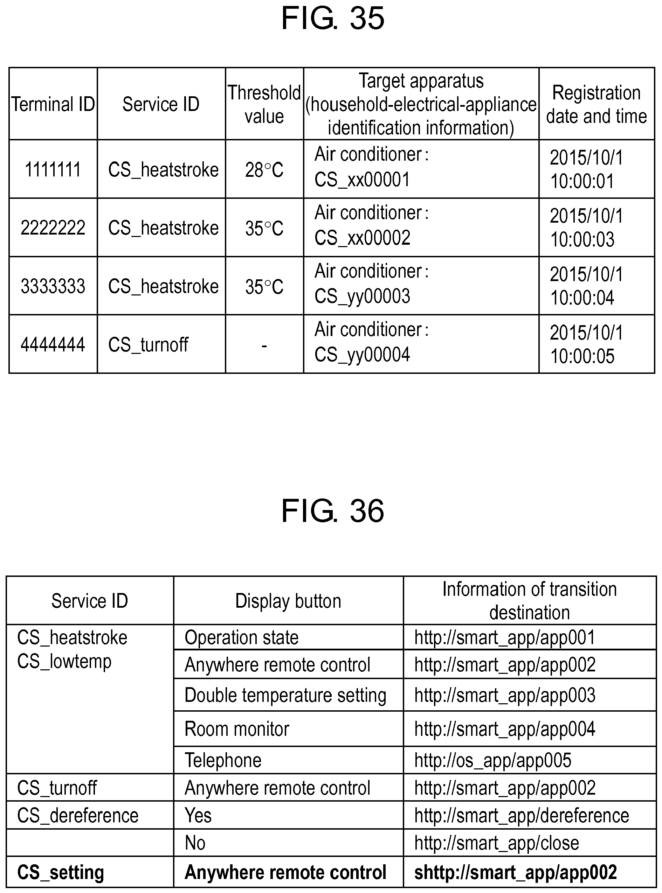

FIG. 35 is a diagram showing a configuration of service registration information according to the third exemplary embodiment of the present disclosure. FIG. 35 shows illustrative service registration information registered in storage unit 8b via user request reception unit 3b. Service registration information is configured by a terminal ID for identifying message reception device 100, a service ID, a threshold value set for each apparatus becoming a service target and for each service ID, household-electrical-appliance identification information, and registration date and time.

Hereinafter, description will be made in a case where the service ID is "CS_heatstroke" for the air conditioner having household-electrical-appliance identification information as "air conditioner: CS-xx00001", and 26°C is set as a threshold value.

When service registration information is input, user request reception unit 3b outputs a service utilization registration request to device linkage server 200 via communication unit 1 of message reception device 100.

When an application-transition-information acquisition request including a service ID is input from application-transition-screen generator 6b, application-transition-information manager 5b reads application transition information managed for each service ID, from storage unit 8b, and outputs the application transition information to application-transition-screen generator 6b described later.

A detail of the application transition information is shown FIG. 36. FIG. 36 is a diagram showing a configuration of application transition information according to the third exemplary embodiment of the present disclosure. As shown in FIG. 36, in the application transition information, display button information and transition destination information are described for each service ID. The display button information is information of a button that is output to screen output unit 7, for example, a name of the button to be displayed. In the transition destination information, there is described transition information to the application to be started when a button displayed in screen output unit 7 is selected.

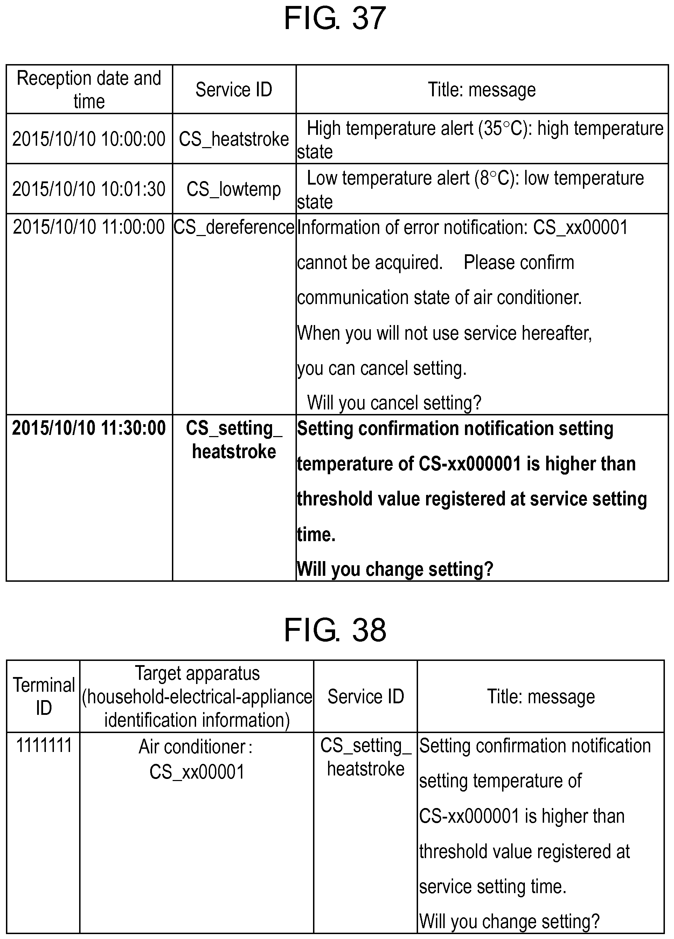

Upon receiving a notification-screen display request from user request reception unit 3b, application-transition-screen generator 6b carries out a process of reading reception message information from storage unit 8b as shown in FIG. 37. FIG. 37 is a diagram showing a configuration of reception message information according to the third exemplary embodiment of the present disclosure.

In order to extract a message text from the reception message information which is read from storage unit 8b, application-transition-screen generator 6b outputs a message acquisition request including a service ID and title/message information to message extraction unit 4. Further, application-transition-screen generator 6b outputs an application-transition-information acquisition request to application-transition-information manager 5b.

Application-transition-screen generator 6b extracts display button information from the application transition information which is input from application-transition-information manager 5b. Then, application-transition-screen generator 6b generates a notification screen that includes characters and marks corresponding to the display button information and a notification message corresponding to a message text input from message extraction unit 4, and outputs the generated screen to screen output unit 7.

Storage unit 8b saves the following information.
- Reception message information that is output by reception-data manager 2 (refer to FIG. 37)
- Application transition information that is saved in advance (refer to FIG. 36)

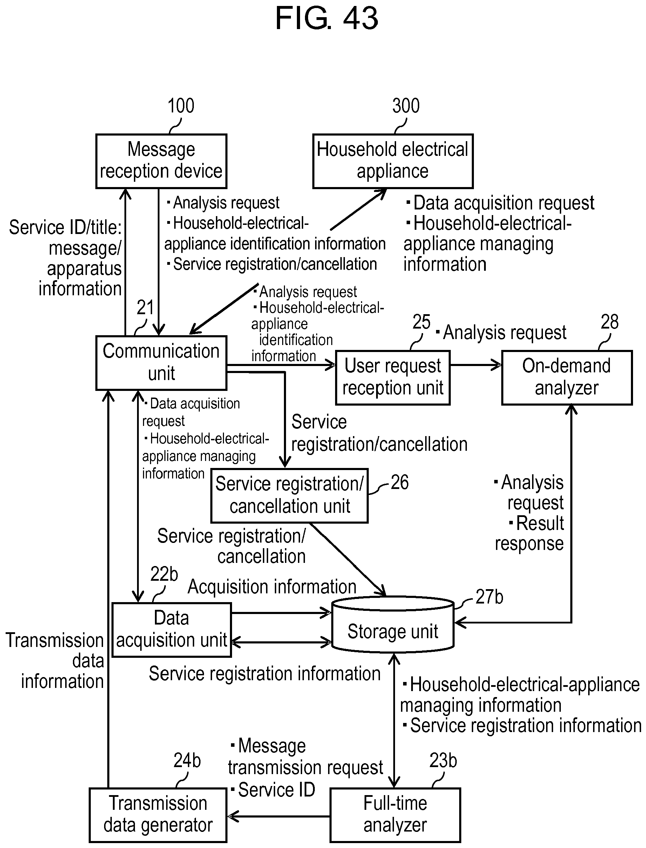

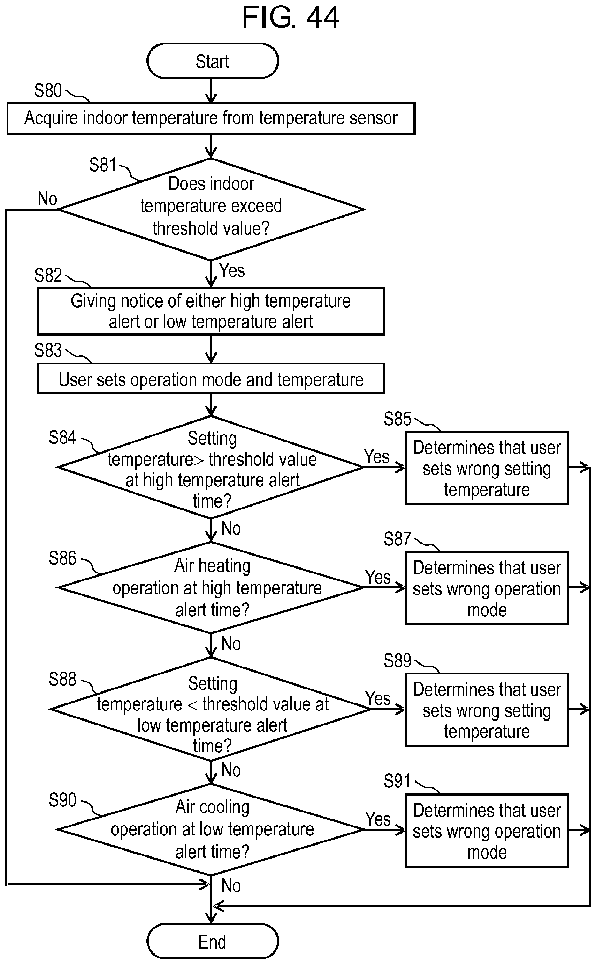

FIG. 34 is a schematic configuration diagram of a device linkage server according to the third exemplary embodiment of the present disclosure. Configuration elements that are the same as those in the first exemplary embodiment will use the same reference marks, and description of the configuration elements will be omitted. FIG. 43 is a schematic view showing a relationship between main configuration elements of the device linkage server according to the third exemplary embodiment of the present disclosure. FIG. 44 is a flowchart showing a flow from indoor-temperature acquisition to user's operation error determination by the device linkage server according to the third exemplary embodiment of the present disclosure.

Data acquisition unit 22b acquires a service utilization registration request including a terminal ID, a service ID, a threshold value, and household-electrical-appliance identification information, from message reception device 100 via communication unit 21 of device linkage server 200, and registers the service utilization registration request in storage unit 27b. That is, data acquisition unit 22b registers, into storage unit 27b, information similar to the information shown in FIG. 35.

In this case, a terminal ID issued by message reception device 100 is registered in storage unit 27b. However, even when a terminal ID is not input to device linkage server 200, device linkage server 200 may be configured to issue a similar ID, register the terminal ID to storage unit 27b, and output the registered ID to message reception device 100.

Full-time analyzer 23b periodically acquires, from storage unit 27b, acquisition information acquired from household electrical appliance 300, and analyzes the acquisition information. When a certain condition defined for each service ID is satisfied, full-time analyzer 23b outputs a message transmission request including a service ID, to transmission data generator 24b described later. Full-time analyzer 23b compares a setting temperature (28°C) read from storage unit 27b with a threshold value (26°C).

In the air cooling operation mode, when the setting temperature is higher than the threshold value, the air conditioner cannot cool the air at a temperature lower than the threshold value. Therefore, full-time analyzer 23b determines that the user has set a wrong setting temperature in the air conditioner. Full-time analyzer 23b outputs a message transmission request for giving notice of the setting of the wrong setting temperature, to transmission data generator 24b. Accordingly, the user is notified of the wrong setting of the setting temperature, so that the user confirms the setting temperature.

Further, when the air conditioner is in the air heating operation mode even when the setting temperature is lower than the threshold value, the air conditioner cannot cool the air to a temperature lower than the threshold value. Therefore, full-time analyzer 23b determines that the user has set a wrong operation mode in the air conditioner. Full-time analyzer 23b outputs a message transmission request for giving notice of the setting of the wrong operation mode, to transmission data generator 24b. Accordingly, the user is notified of the setting of the wrong operation mode , so that the user confirms the operation mode.

In the service of giving notice that the indoor temperature is in the low temperature state (service ID: CS_lowtemp), when the setting temperature in the air heating operation is higher than the threshold value, full-time analyzer 23b determines that the user has set a wrong setting temperature in the air conditioner. For example, when the setting temperature is 23°C and the threshold value is 25°C, the setting temperature is lower than the threshold value. Therefore, full-time analyzer 23b determines that the user has set a wrong setting temperature in the air conditioner. Further, when the operation mode is the air cooling operation, full-time analyzer 23b determines that the user has set a wrong operation mode in the air conditioner.

When the service of giving notice that the indoor temperature is in the high temperature state (service ID: CS_heatstroke) and the service of giving notice that the indoor temperature is in the low temperature state (service ID: CS_lowtemp) are set at the same time in the air conditioner, full-time analyzer 23b adds the operation mode (air cooling operation, air heating operation) read from storage unit 27b to the determination standard.

That is, when the operation mode is air cooling and the setting temperature is higher than the threshold value, full-time analyzer 23b determines that the user has set a wrong setting temperature in the air conditioner. Further, when the operation mode is air heating and the setting temperature is lower than the threshold value, full-time analyzer 23b determines that the user has set a wrong setting temperature in the air conditioner.

In the case of the air heating operation in the "high temperature alert" service and in the case of the air cooling operation in the "low temperature alert" service, full-time analyzer 23b determines that the user has set a wrong operation mode in the air conditioner.

Including the operation of each configuration element described above, indoor-temperature acquisition to user's operation error determination by device linkage server 200 will be described with reference to a flowchart shown in FIG. 44. FIG. 44 is a flowchart from indoor-temperature acquisition to user's operation error determination by the device linkage server according to the third exemplary embodiment of the present disclosure.

The temperature sensor of the air conditioner acquires the indoor temperature (step S80). Full-time analyzer 23b determines whether the acquired indoor temperature exceeds the threshold value (step S81).

Full-time analyzer 23b makes transmission data generator 24b generate high temperature alert when the indoor temperature is higher than the threshold value, and low temperature alert when the indoor temperature is lower than the threshold value. Transmission data generator 24b notifies the user of the generated alert.

Hereinafter, there is assumed a case where the user looks at the notification content and sets the operation mode and the temperature in the air conditioner (step S83).

When the user setting temperature is higher than the threshold value at the high temperature alert time, full-time analyzer 23b determines that the user has set a wrong setting temperature (step S84 and step S85).

When the user has set the air heating operation at the high temperature alert time, full-time analyzer 23b determines that the user has set a wrong operation mode (step S86 and step S87).

When the user setting temperature is lower than the threshold value at the low temperature alert time, full-time analyzer 23 determines that the user has set a wrong setting temperature (step S88 and step S89).

When the user has set the air cooling operation at the low temperature alert time, full-time analyzer 23b determines that the user has set a wrong operation mode (step S90 and step S91).

Based on the above, service of high temperature alert and low temperature alert can be realized more effectively by determining a user's setting error.

In order to reduce the above user's setting error, on the setting operation screen of the air conditioner for transiting from "high temperature alert" and "low temperature alert", there may be displayed in advance air cooling operation for "high temperature alert" and air heating operation for "low temperature alert" so that the user can easily carry out the setting. In this case, by displaying the threshold value in advance, user setting of the setting temperature may be facilitated.

Transmission data generator 24b generates transmission data, based on the message transmission request input from full-time analyzer 23b, and outputs the transmission data to communication unit 21 of device linkage server 200. FIG. 38 shows a detail of the transmission data. FIG. 38 is a diagram showing a configuration of transmission data according to the third exemplary embodiment of the present disclosure. As shown in FIG. 38, the transmission data includes terminal ID, household-electrical-appliance identification information, a service ID for identifying a service type, and title/message information tied to each service ID. In the case of the setting-confirmation notification service for giving notice of a possibility of presence of a wrong setting temperature, the ID indicating an air-conditioner setting confirmation request is registered as a service ID. For example, in the case of "CS_setting_heatstroke", "CS" is the ID indicating that a target apparatus is the air conditioner, and "setting" is the ID indicating setting confirmation notification.

The title/message information generated may be configured by a combination of acquisition information acquired from household electrical appliance 300 and a fixed phrase, for example, like in the first exemplary embodiment. In the case of setting confirmation notification, for example, a title is "setting confirmation notification", and a message text is "Setting temperature of (target apparatus) is higher than threshold value registered at service setting time. Will you change setting?".

Next, a preferable application-screen transition flow of message reception device 100 and device linkage server 200 according to the present exemplary embodiment will be described.

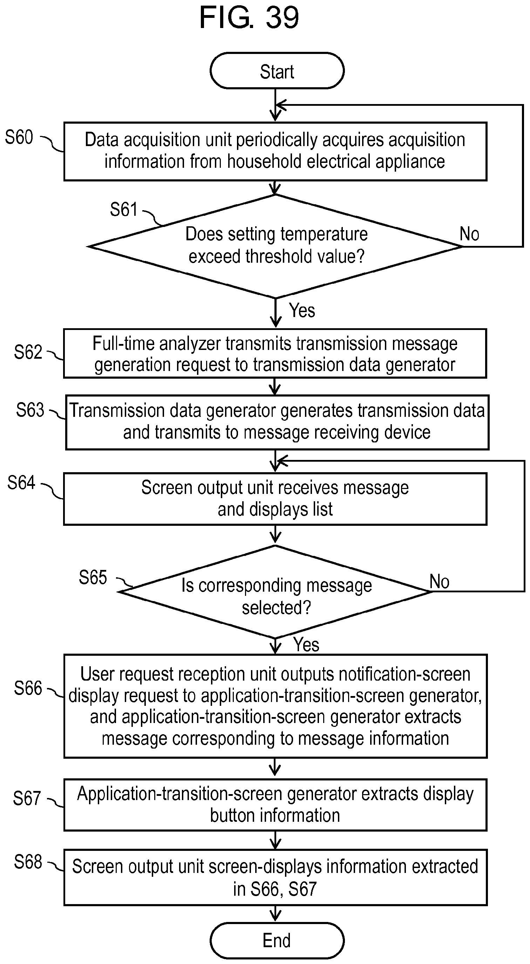

FIG. 39 is a flowchart from message notification by the device linkage server to display of a transition screen to an application in a message reception device according to the third exemplary embodiment of the present disclosure. Operations of message reception device 100 and device linkage server 200 will be described with reference to FIG. 39. In the present exemplary embodiment, only the operations that are further carried out in addition to the operations described in the first exemplary embodiment or the second exemplary embodiment will be described.

Data acquisition unit 22b periodically acquires acquisition information (refer to FIG. 11) from the air conditioner via communication unit 21 of device linkage server 200, and outputs the acquisition information to storage unit 27b (step S60). Here, description will be made by assuming that data is acquired about the apparatus of which household-electrical-appliance identification information shown in FIG. 7 is "air conditioner: CS-xx00001".

Full-time analyzer 23b periodically reads acquisition information and service registration information registered in storage unit 27b, and analyzes whether a setting temperature acquired from the apparatus of which household-electrical-appliance identification information is "CS-xx00001" exceeds a threshold value included in the service registration information (step S61).

When the setting temperature does not exceed the threshold value (No in step S61), full-time analyzer 23b continues analysis of data acquired from storage unit 27b. When the setting temperature exceeds the threshold value (Yes in step S61), the process proceeds to the next step, and full-time analyzer 23b transmits a transmission message generation request including a service ID to transmission data generator 24b (step S62). After generating the transmission data (refer to FIG. 38), transmission data generator 24b transmits the generated transmission data to message reception device 100 via communication unit 21 of device linkage server 200 (step S63).

Upon receiving the transmission data transmitted from device linkage server 200 (refer to FIG. 38), communication unit 1 of message reception device 100 outputs message information included in the transmission data as reception message information (refer to FIG. 37), to reception-data manager 2.

Reception-data manager 2 registers the received message information in chronological order into storage unit 8a. Reception-data manager 2 reads in chronological order the reception message information registered in storage unit 8a, and inputs the reception message information to screen output unit 7.

Screen output unit 7 displays title/message information, out of the reception message information input from reception-data manager 2 (step S64).

User request reception unit 3 detects whether a corresponding message is selected from a reception list displayed in screen output unit 7 of message reception device 100 (step S65). When selection of a corresponding message is detected (Yes in step S65), user request reception unit 3 outputs a notification-screen display request including the application selection information (reception date and time and a service ID) of the corresponding message to application-transition-screen generator 6b.

Application-transition-screen generator 6b extracts a message corresponding to the message information transmitted from device linkage server 200, based on the application selection information (step S66).

Application-transition-screen generator 6b extracts display button information to be displayed in screen output unit 7 from the application transition information (step S67).

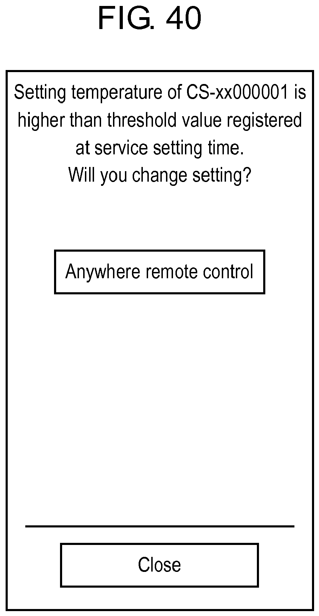

Then, application-transition-screen generator 6b combines the extracted message and the display button information together, and outputs a combined result to screen output unit 7. Screen output unit 7 displays the notification screen input from application-transition-screen generator 6 (step S68). The image of the screen display is shown in FIG. 40. FIG. 40 is a view showing a notification screen according to the third exemplary embodiment of the present disclosure.

In a case where a service ID of reception message information read from storage unit 8b is "CS_setting", that is, in a case where the service is setting confirmation notification, as shown in FIG. 40, a notification message "Setting temperature of (name of target apparatus) is higher than threshold value registered at service setting time. Will you change setting?" is disposed at an upper part of the screen. At a lower part of the notification message, the "anywhere remote control" button as a button including characters corresponding to the display button information is disposed. Further at a lower part of the notification message, a "close" button or a "cancel" button is disposed.

User request reception unit 3 always monitors whether there is a selection of the "anywhere remote control" button by user operation. When screen-transition manager 10 detects the operation of selecting the "anywhere remote control" button, application-transition-screen generator 6b inputs an application-transition-information acquisition request corresponding to the "anywhere remote control" button to application-transition-information manager 5. Application-transition-information manager 5 reads corresponding transition destination information from storage unit 8b, and outputs an application start request including the transition destination information to application-start instructor 9.

Application-start instructor 9 carries out the application start process based on the transition destination information, and outputs the application screen of the application to screen output unit 7.

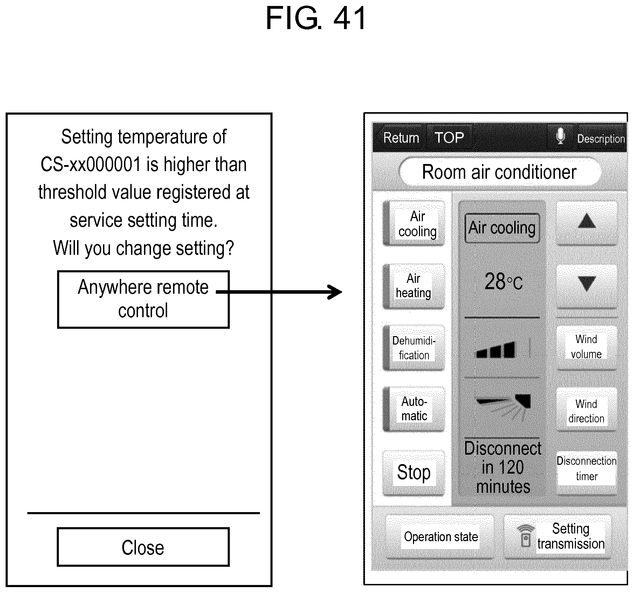

That is, when the "anywhere remote control" button is selected, the screen transits to the air conditioner control screen as a screen on which a target apparatus can be remotely controlled, without application start by user operation. Therefore, the user can change the setting of the setting temperature and the like of the air conditioner. The image of screen transition to the air conditioner control screen is shown in FIG. 41. FIG. 41 is a diagram showing transition from the notification screen to the service setting screen according to the third exemplary embodiment of the present disclosure.

As described above, message reception device 100 according to the present exemplary embodiment is configured to notify the user of a system operation state during provision of a service, and present the user with a button for transiting to the application screen matching the notification content. Therefore, it becomes possible to reduce work and time required to start the application of high necessity and reach the screen.

In the above exemplary embodiment, it is described that the full-time analyzer periodically acquires and analyzes the acquisition information. However, the full-time analyzer may acquire and analyze the acquisition information when an event or trigger occurs, without periodically doing so. For example, the full-time analyzer may acquire and analyze the acquisition information when new information is acquired via the communication unit, when the indoor temperature or outdoor temperature changes, when the operation state of the household electrical appliance changes, and when the user makes a new request.

The present disclosure provides a message reception device and a screen transition method capable of storing information of an apparatus connected to a network, and notifying a portable terminal device owned by a user of a result of analyzing a state of the apparatus. Therefore, the present disclosure can be applied to not only the household electrical appliances exemplified in the above exemplary embodiments, but can be widely applied to apparatuses that are used in stores, facilities, offices, factories, vehicles, etc.

## Claims

1. A message reception device (100) comprising:
a communication unit (21) configured to receive message information from a device linkage server (200) to which at least one electrical apparatus (300) is connected, the message information having a message text for giving notice concerning the electrical apparatus (300) related to a service ID for identifying a content of a service concerning the electrical apparatus;
a storage unit (8) configured to save application transition information having the service ID, display button information, and transition destination information which are corresponding to each other;
an application-transition-screen generator (6) configured to extract the display button information corresponding to the service ID included in the message information , and configured to generate a notification screen including a display button corresponding to the display button information and a notification message corresponding to the message text included in the message information;
a screen output unit (7) configured to output the notification screen; and
an application-start instructor (9) configured to make the notification screen transit to an application screen on which an application prescribed by the transition destination information corresponding to the display button information starts, or to a function screen prescribed by the transition destination information corresponding to the display button information, based on the application transition information, when the display button is selected on the notification screen.

2. The message reception device (100) according to claim 1, further comprising a screen-transition manager (10) configured to make the application screen or the function screen transit to the notification screen, when an operation of ending the application screen or the function screen is carried out on the application screen or the function screen to which the notification screen transits.

3. The message reception device (100) according to claim 1, wherein the communication unit (21) is configured to receive information of an operation mode of the electrical apparatus (300), a setting temperature set to the electrical apparatus (300), and an indoor temperature and an outdoor temperature measured by a sensor mounted in the electrical apparatus (300).

4. The message reception device (100) according to claim 3, further comprising a reception-data manager (2) configured to acquire the information from the communication unit (21), wherein
the reception-data manager (2) is configured to acquire error information indicating that the reception-data manager (2) is in a state of being unable to acquire the information from the electrical apparatus (300).

5. The message reception device (100) according to claim 1, wherein the device linkage server (200) comprises a data acquisition unit (22) configured to acquire information concerning the electrical apparatus (300) from the electrical apparatus (300), and a full-time analyzer (23) configured to determine whether or not the information concerning the electrical apparatus (300) satisfies a predetermined condition set for each service ID.

6. The message reception device (100) according to claim 5, wherein the data acquisition unit (22) is configured to acquire information of an operation mode of the electrical apparatus (300), a setting temperature set to the electrical apparatus (300), and an indoor temperature and an outdoor temperature measured by a sensor mounted in the electrical apparatus (300).

7. The message reception device (100) according to claim 5, wherein the data acquisition unit (22) is configured to acquire error information indicating that the data acquisition unit (22) is in a state of being unable to acquire the information from the electrical apparatus (300).

8. The message reception device (100) according to claim 6, wherein the full-time analyzer (23) determines whether the predetermined condition is satisfied, based on the indoor temperature and a threshold value determined in advance or a threshold value included in the information concerning the electrical apparatus (300).

9. The message reception device (100) according to claim 7, wherein the full-time analyzer (23) determines whether the predetermined condition is satisfied, based on the error information.

10. The message reception device (100) according to claim 6, wherein when the operation mode is an air cooling operation and when the setting temperature is higher than a threshold value determined in advance or a threshold value included in the information concerning the electrical apparatus, the full-time analyzer (23) determines that the setting temperature is wrong.

11. The message reception device (100) according to claim 6, wherein when the operation mode is an air heating operation and when the setting temperature is lower than a threshold value determined in advance or a threshold value included in the information concerning the electrical apparatus (300), the full-time analyzer determines that the setting temperature is wrong.

12. The message reception device (100) according to claim 8, wherein when the indoor temperature is lower than a threshold value determined in advance or a threshold value included in information concerning the electrical apparatus (300) and when the operation mode is an air cooling operation, the full-time analyzer (23) determines that setting of the operation mode is wrong.

13. The message reception device (100) according to claim 6, wherein when the indoor temperature is higher than a threshold value determined in advance or a threshold value included in information concerning the electrical apparatus (300) and when the operation mode is an air heating operation, the full-time analyzer (23) determines that setting of the operation mode is wrong.

14. The message reception device (100) according to claim 5, wherein the device linkage server (200) further comprises a transmission data generator (24) that generates the message information corresponding to the service ID in accordance with an output of the full-time analyzer.

15. A screen transition method comprising:
a step of receiving, from a device linkage server (200) to which at least one electrical apparatus (300) is connected, message information having message text for giving notice concerning an electrical apparatus (300) related to a service ID for identifying a content of a service concerning the electrical apparatus (300);
a step of extracting display button information corresponding to the service ID included in the message information from application transition information having the service ID, display button information, and transition destination information corresponding to each other, and generating a notification screen that includes display button corresponding to the display button information and notification message corresponding to the message text included in the message information; and
a step of making the notification screen transit to an application screen on which an application prescribed by the transition destination information corresponding to the display button information starts, or to a function screen prescribed by the transition destination information corresponding to the display button information, based on the application transition information, when the display button is selected at a screen output unit to which the notification screen is output.

## Patentansprüche

1. Nachrichtenempfangseinrichtung (100), die Folgendes umfasst:
eine Kommunikationseinheit (21), die konfiguriert ist, Nachrichteninformationen von einem Einrichtungsverbindungsserver (200), mit dem mindestens eine elektrische Vorrichtung (300) verbunden ist, zu empfangen, wobei die Nachrichteninformationen einen Nachrichtentext zum Benachrichtigen bezüglich der elektrischen Vorrichtung (300), die in Beziehung zu einer Dienstkennung zum Identifizieren eines Dienstinhalts bezüglich der elektrischen Vorrichtung steht, enthalten;
eine Speichereinheit (8), die konfiguriert ist, Anwendungsübergangsinformationen, die die Dienstkennung, Anzeigeschaltflächeninformationen und Übergangszielinformationen besitzen, die einander entsprechen, zu speichern;
eine Anwendungsübergangsbildschirm-Erzeugungsvorrichtung (6), die konfiguriert ist, die Anzeigeschaltflächeninformationen zu extrahieren, die der Dienstkennung, die in den Nachrichteninformationen enthalten ist, entsprechen, und die konfiguriert ist, einen Benachrichtigungsbildschirm zu erzeugen, der eine Anzeigeschaltfläche, die den Anzeigeschaltflächeninformationen entspricht, und eine Benachrichtigungsnachricht, die dem Nachrichtentext, der in den Nachrichteninformationen enthalten ist, entspricht, enthält;
eine Bildschirmausgabeeinheit (7), die konfiguriert ist, den Benachrichtigungsbildschirm auszugeben; und
eine Anwendungsstartanweisungsvorrichtung (9), die konfiguriert ist, den Benachrichtigungsbildschirm zu veranlassen, auf einen Anwendungsbildschirm, auf dem eine Anwendung, die durch die Übergangszielinformationen, die den Anzeigeschaltflächeninformationen entsprechen, vorgegeben ist, startet, oder auf einen Funktionsbildschirm, der durch die Übergangszielinformationen, die den Anzeigeschaltflächeninformationen entsprechen, vorgegeben ist, auf der Grundlage der Anwendungsübergangsinformationen überzugehen, wenn die Anzeigeschaltfläche auf dem Benachrichtigungsbildschirm ausgewählt wird.

2. Nachrichtenempfangseinrichtung (100) nach Anspruch 1, die ferner einen Bildschirmübergangsmanager (10) umfasst, der konfiguriert ist, zu bewirken, dass der Anwendungsbildschirm oder der Funktionsbildschirm in den Benachrichtigungsbildschirm übergehen, wenn ein Vorgang des Beendens des Anwendungsbildschirms oder des Funktionsbildschirms auf dem Anwendungsbildschirm oder dem Funktionsbildschirm, auf den der Benachrichtigungsbildschirm übergeht, ausgeführt wird.

3. Nachrichtenempfangseinrichtung (100) nach Anspruch 1, wobei die Kommunikationseinheit (21) konfiguriert ist, Informationen eines Betriebsmodus der elektrischen Vorrichtung (300), eine Erstarrungstemperatur, die an der elektrischen Vorrichtung (300) festgelegt wird, und eine Innentemperatur und eine Außentemperatur, die durch einen Sensor, der in der elektrischen Vorrichtung (300) angebracht ist, gemessen wird, zu empfangen.

4. Nachrichtenempfangseinrichtung (100) nach Anspruch 3, die ferner einen Empfangsdatenmanager (2), der konfiguriert ist, die Informationen von der Kommunikationseinheit (21) zu erfassen, umfasst, wobei
der Empfangsdatenmanager (2) konfiguriert ist, Fehlerinformationen zu erfassen, die anzeigen, dass sich der Empfangsdatenmanager (2) in einem Zustand befindet, in dem er nicht in der Lage ist, die Informationen von der elektrischen Vorrichtung (300) zu erfassen.

5. Nachrichtenempfangseinrichtung (100) nach Anspruch 1, wobei der Einrichtungsverbindungsserver (200) eine Datenerfassungseinheit (22), die konfiguriert ist, Informationen bezüglich der elektrischen Vorrichtung (300) von der elektrischen Vorrichtung (300) zu erfassen, und eine Daueranalyseeinrichtung (23), die konfiguriert ist, zu bestimmen, ob die Informationen bezüglich der elektrischen Vorrichtung (300) eine vorgegebene Bedingung, die für jede Dienstkennung festgelegt ist, erfüllt oder nicht, umfasst.

6. Nachrichtenempfangseinrichtung (100) nach Anspruch 5, wobei die Datenerfassungseinheit (22) konfiguriert ist, Informationen eines Betriebsmodus der elektrischen Vorrichtung (300), eine Erstarrungstemperatur, die an der elektrischen Vorrichtung (300) festgelegt wird, und eine Innentemperatur und eine Außentemperatur, die durch einen Sensor, der in der elektrischen Vorrichtung (300) angebracht ist, zu erfassen.

7. Nachrichtenempfangseinrichtung (100) nach Anspruch 5, wobei die Datenerfassungseinheit (22) konfiguriert ist, Fehlerinformationen zu erfassen, die anzeigen, dass sich die Datenerfassungseinheit (22) in einem Zustand befindet, in dem sie nicht in der Lage ist, die Informationen von der elektrischen Vorrichtung (300) zu erfassen.

8. Nachrichtenempfangseinrichtung (100) nach Anspruch 6, wobei die Daueranalyseeinrichtung (23) auf Grundlage der Innentemperatur und eines Schwellenwerts, der im Voraus bestimmt wird, oder eines Schwellenwerts, der in den Informationen bezüglich der elektrischen Vorrichtung (300) enthalten ist, bestimmt, ob die vorgegebene Bedingung erfüllt ist.

9. Nachrichtenempfangseinrichtung (100) nach Anspruch 7, wobei die Daueranalyseeinrichtung (23) auf der Grundlage der Fehlerinformationen bestimmt, ob die vorgegebene Bedingung erfüllt ist.

10. Nachrichtenempfangseinrichtung (100) nach Anspruch 6, wobei dann, wenn der Betriebsmodus ein Luftkühlungsbetrieb ist und wenn die Erstarrungstemperatur höher als ein Schwellenwert, der im Voraus bestimmt wurde, oder ein Schwellenwert, der in den Informationen bezüglich der elektrischen Vorrichtung enthalten ist, ist, die Daueranalyseeinrichtung (23) bestimmt, dass die Erstarrungstemperatur falsch ist.

11. Nachrichtenempfangseinrichtung (100) nach Anspruch 6, wobei dann, wenn der Betriebsmodus ein Lufterwärmungsbetrieb ist und wenn die Erstarrungstemperatur geringer als ein Schwellenwert, der im Voraus bestimmt wurde, oder ein Schwellenwert, der in den Informationen bezüglich der elektrischen Vorrichtung (300) enthalten ist, ist, die Daueranalyseeinrichtung bestimmt, dass die Erstarrungstemperatur falsch ist.

12. Nachrichtenempfangseinrichtung (100) nach Anspruch 8, wobei dann, wenn die Innentemperatur geringer als ein Schwellenwert, der im Voraus bestimmt wurde, oder ein Schwellenwert, der in Informationen bezüglich der elektrischen Vorrichtung (300) enthalten ist, ist und wenn der Betriebsmodus ein Luftkühlungsbetrieb ist, die Daueranalyseeinrichtung (23) bestimmt, dass die Einstellung des Betriebsmodus falsch ist.

13. Nachrichtenempfangseinrichtung (100) nach Anspruch 6, wobei dann, wenn die Innentemperatur höher als ein Schwellenwert, der im Voraus bestimmt wurde, oder ein Schwellenwert, der in Informationen bezüglich der elektrischen Vorrichtung (300) enthalten ist, ist und wenn der Betriebsmodus ein Lufterwärmungsbetrieb ist, die Daueranalyseeinrichtung (23) bestimmt, dass die Einstellung des Betriebsmodus falsch ist.

14. Nachrichtenempfangseinrichtung (100) nach Anspruch 5, wobei der Einrichtungsverbindungsserver (200) ferner eine Übertragungsdatenerzeugungsvorrichtung (24) umfasst, die die Nachrichteninformationen, die der Dienstkennung entsprechen, gemäß einem Ausgangssignal des Daueranalysators erzeugt.

15. Bildschirmübergangsverfahren, das Folgendes umfasst:
einen Schritt des Empfangens von einem Einrichtungsverbindungsserver (200), mit dem mindestens eine elektrische Vorrichtung (300) verbunden ist, von Nachrichteninformationen, die einen Nachrichtentext zum Benachrichtigen bezüglich einer elektrischen Vorrichtung (300), die in Beziehung zu einer Dienstkennung zum Identifizieren eines Dienstinhalts bezüglich der elektrischen Vorrichtung (300) steht, enthalten;
einen Schritt des Extrahierens von Anzeigeschaltflächeninformationen, die der Dienstkennung, die in den Nachrichteninformationen enthalten ist, entsprechen, aus Anwendungsübergangsinformationen, die die Dienstkennung, Anzeigeschaltflächeninformationen und Übergangszielinformationen, die einander entsprechen, besitzen, und des Erzeugens eines Benachrichtigungsbildschirms, der eine Anzeigeschaltfläche, die den Anzeigeschaltflächeninformationen entspricht, und eine Benachrichtigungsnachricht, die dem Nachrichtentext, der in den Nachrichteninformationen enthalten ist, entspricht, enthält;
einen Schritt des Veranlassens, dass der Benachrichtigungsbildschirm auf einen Anwendungsbildschirm, auf dem eine Anwendung, die durch die Übergangszielinformationen, die den Anzeigeschaltflächeninformationen entsprechen, vorgegeben ist, startet, oder auf einen Funktionsbildschirm, der durch die Übergangszielinformationen, die den Anzeigeschaltflächeninformationen entsprechen, vorgegeben ist, auf der Grundlage der Anwendungsübergangsinformationen übergeht, wenn die Anzeigeschaltfläche auf einer Bildschirmausgabeeinheit, auf der der Benachrichtigungsbildschirm ausgegeben wird, ausgewählt wird.

## Revendications

1. Dispositif de réception de message (100) comportant :
une unité de communication (21) configurée pour recevoir des informations de message en provenance d'un serveur de liaison dispositif (200) auquel est connecté au moins un appareil électrique (300), l'information de message comportant un texte de message donnant une notification concernant l'appareil électrique (300), en lien avec un ID de service pour identifier le contenu d'un service concernant l'appareil électrique ;
une unité de stockage (8) configurée pour sauvegarder une information de transition d'application comprenant l'ID de service, une information de bouton d'affichage, et une information de destination de transition qui se correspondent ;
un générateur d'écran de transition d'application (6) configuré pour extraire l'information de bouton d'affichage correspondant à l'ID de service comprise dans les informations de message, et configuré pour générer un écran de notification comprenant un bouton d'affichage correspondant à l'information de bouton d'affichage et un message de notification correspondant au texte de message compris dans l'information de message ;
une unité d'émission en sortie d'écran (7) configurée pour émettre en sortie l'écran de notification ; et
un instructeur de démarrage d'application (8) configuré pour faire passer l'écran de notification vers un écran d'application dans lequel démarre une application prescrite par l'information de destination de transition correspondant à l'information de bouton d'affichage, ou, selon l'information de transition d'application, vers un écran de fonction prescrit par l'information de destination de transition correspondant à l'information de bouton d'affichage, lorsque le bouton d'affichage est sélectionné sur l'écran de notification.

2. Dispositif de réception de message (100) selon la revendication 1, comportant en outre un gestionnaire de transition d'écran (10) configuré pour faire passer l'écran d'application ou l'écran de fonction vers l'écran de notification quand une opération d'arrêt de l'écran d'application ou de l'écran de fonction est effectuée sur l'écran d'application ou l'écran de fonction vers lequel passe l'écran de notification.

3. Dispositif de réception de message (100) selon la revendication 1, dans lequel l'unité de communication (21) est configurée pour recevoir des informations d'un mode de fonctionnement de l'appareil électrique (300), une température de réglage réglée dans l'appareil électrique (300), et une température intérieure et une température extérieure mesurée par un capteur monté dans l'appareil électrique (300).

4. Dispositif de réception de message (100) selon la revendication 3, comportant en outre un gestionnaire de données de réception (2) configuré pour acquérir les informations auprès de l'unité de communication (21), où
le gestionnaire de données de réception (2) est configuré pour acquérir des informations d'erreur indiquant que le gestionnaire de données de réception (2) est dans un état l'empêchant d'acquérir les informations auprès de l'appareil électrique (300).

5. Dispositif de réception de message (100) selon la revendication 1, dans lequel le serveur de liaison dispositif (200) comporte une unité d'acquisition de données (22) configurée pour acquérir des informations concernant l'appareil électrique (300) auprès de l'appareil électrique (300), et un analyseur à plein temps (23) configuré pour déterminer si l'information concernant l'appareil électrique (300) remplit ou non une condition prédéterminée définie pour chaque ID de service.

6. Dispositif de réception de message (100) selon la revendication 5, dans lequel l'unité d'acquisition de données (22) est configurée pour acquérir des informations d'un mode de fonctionnement de l'appareil électrique (300), une température de réglage réglée dans l'appareil électrique (300), et une température intérieure et une température extérieure mesurée par un capteur monté dans l'appareil électrique (300).

7. Dispositif de réception de message (100) selon la revendication 5, dans lequel l'unité d'acquisition de données (22) est configurée pour acquérir des informations d'erreur indiquant que l'unité d'acquisition de données (22) est dans un état l'empêchant d'acquérir les informations auprès de l'appareil électrique (300).

8. Dispositif de réception de message (100) selon la revendication 6, dans lequel l'analyseur à temps plein (23) détermine si la condition prédéterminée est remplie en se fondant sur la température intérieure et une valeur seuil déterminée en avance ou une valeur seuil inclue dans les informations concernant l'appareil électrique (300).

9. Dispositif de réception de message (100) selon la revendication 7, dans lequel l'analyseur à temps plein (23) détermine si la condition prédéterminée est remplie en se fondant sur l'information d'erreur.

10. Dispositif de réception de message (100) selon la revendication 6, dans lequel lorsque le mode de fonctionnement est une opération de refroidissement de l'air et lorsque la température réglée est supérieure à une valeur seuil déterminée à l'avance ou une valeur seuil inclue dans l'information concernant l'appareil électrique, l'analyseur à temps plein (23) détermine que la température réglée est erronée.

11. Dispositif de réception de message (100) selon la revendication 6, dans lequel lorsque le mode de fonctionnement est une opération de chauffage de l'air et lorsque la température réglée est inférieure à une valeur seuil déterminée à l'avance ou une valeur seuil inclue dans l'information concernant l'appareil électrique (300), l'analyseur à temps plein détermine que la température réglée est erronée.

12. Dispositif de réception de message (100) selon la revendication 8, dans lequel lorsque la température intérieure est inférieure à une valeur seuil déterminée à l'avance ou une valeur seuil inclue dans l'information concernant l'appareil électrique (300) et lorsque le mode de fonctionnement est une opération de refroidissement de l'air, l'analyseur à temps plein (23) détermine que le réglage du mode de fonctionnement est erroné.

13. Dispositif de réception de message (100) selon la revendication 6, dans lequel lorsque la température intérieure est supérieure à une valeur seuil déterminée à l'avance ou une valeur seuil inclue dans l'information concernant l'appareil électrique (300) et lorsque le mode de fonctionnement est une opération de chauffage de l'air, l'analyseur à temps plein (23) détermine que le réglage du mode de fonctionnement est erroné.

14. Dispositif de réception de message (100) selon la revendication 5, dans lequel le serveur de liaison dispositif (200) comporte en outre un générateur de données de transmission (24) qui génère les informations de message correspondant à l'ID de service conformément à une sortie de l'analyseur à temps plein.

15. Procédé de transition d'écran comportant :
une étape consistant à recevoir, en provenance d'un serveur de liaison dispositif (200) auquel est connecté au moins un appareil électrique (300), des informations de message comportant un texte de message donnant une notification concernant l'appareil électrique (300) en lien avec un ID de service pour identifier le contenu d'un service concernant l'appareil électrique (300) ;
une étape consistant à extraire d'informations de transition d'application comprenant l'ID de service, une information de bouton d'affichage, et une information de destination transition correspondant les unes aux autres, une information de bouton d'affichage correspondant à l'ID de service comprise dans les informations de message, et générer un écran de notification comprenant un bouton d'affichage correspondant à l'information de bouton d'affichage et un message de notification correspondant au texte de message compris dans l'information de message ; et
une étape consistant à faire passer l'écran de notification vers un écran d'application dans lequel démarre une application prescrite par l'information de destination de transition correspondant à l'information de bouton d'affichage, ou, selon l'information de transition d'application, vers un écran de fonction prescrit par l'information de destination de transition correspondant à l'information de bouton d'affichage, lorsque le bouton d'affichage est sélectionné au niveau d'une unité de sortie d'écran vers laquelle l'écran de notification est émis en sortie.
